(19) Europäisches Patentamt

European Patent Office

Office européen des brevets

(11) **EP 0 981 879 B1**

(12) **FASCICULE DE BREVET EUROPEEN**

(45) Date de publication et mention
de la délivrance du brevet:
**29.12.2004 Bulletin 2004/53**

(21) Numéro de dépôt: **99939243.4**

(22) Date de dépôt: **04.03.1999**

(51) Int Cl.⁷: **H04L 12/56**, H04Q 11/04

(86) Numéro de dépôt international:
**PCT/FR1999/000495**

(87) Numéro de publication internationale:
**WO 1999/046901 (16.09.1999 Gazette 1999/37)**

(54) **PROCEDE ET DISPOSITIF DE CONTROLE DE LA CONFORMITE DU DEBIT DES CELLULES DE DONNEES**

VERFAHREN UND VORRICHTUNG ZUR KONTROLLE DER BITRATENKONFORMITÄT VON DATUMZELLEN

METHOD AND DEVICE FOR CONTROLLING BIT RATE CONFORMITY OF DATA CELLS

(84) Etats contractants désignés:
**DE FR GB IT**

(30) Priorité: **12.03.1998 FR 9803274**

(43) Date de publication de la demande:
**01.03.2000 Bulletin 2000/09**

(73) Titulaire: **FRANCE TELECOM SA**
**75015 Paris (FR)**

(72) Inventeurs:
• **KLAY, Francis**
  **F-22300 Lannion (FR)**
• **RABADAN, Christophe**
  **F-22300 Ploubezre (FR)**

(74) Mandataire: **Maillet, Alain et al**
**SCP Le Guen & Maillet,**
**5, Place Newquay,**
**B.P. 70250**
**35802 Dinard Cedex (FR)**

(56) Documents cités:
**GB-A- 2 301 977**

• **LIU K ET AL: "DESIGN AND ANALYSIS OF A BANDWIDTH MANAGEMENT FRAMEWORK FOR ATM-BASED BROADBAND ISDN" IEEE COMMUNICATIONS MAGAZINE, vol. 35, no. 5, mai 1997, pages 138-145, XP000657119**

## Description

La présente invention concerne un procédé de contrôle de la conformité d'un flux de cellules émis par une application source d'un réseau à haut débit, par exemple d'un réseau utilisant le mode de transfert dit ATM (Asynchronous Transfer Mode). Plus précisément, l'invention est appliquée aux sources dont le mode de transfert est un mode à partage de ressources disponibles, encore appelé dans le domaine de la technique mode ABR (Available Bits Rate).

On rappelle à toutes fins utiles que le mode de transfert ATM consiste à transporter dans un réseau de données des paquets d'informations de taille fixe appelés cellules. Un terminal source envoie ainsi des cellules de données dans le réseau qui les transporte jusqu'à un terminal destinataire suivant un protocole de communication préétabli. Ces cellules sont ainsi dirigées et orientées au travers d'un canal préétabli entre les deux terminaux. Ce canal, qui est aussi appelé une connexion, est notamment caractérisé par son débit qui doit être suffisant pour transporter toute l'information émise par la source. Pour ce faire, à chaque élément traversé par ledit canal, un débit est réservé à ce canal.

L'intérêt majeur des réseaux à haut débit basés sur le mode de transfert asynchrone ATM, outre l'accès à des capacités de transmission et de commutation pouvant supporter des hauts débits, est de pouvoir intégrer sur un même support de transmission des applications dont les besoins en terme de qualité de service et de ressources sont différents. Ces réseaux ATM permettent, de plus, l'utilisation d'applications qui émettent des cellules avec des débits variables dans le temps, comme des applications de type vidéo ou de type Internet, ce qui entraîne une variation dans le temps de la consommation des ressources du réseau utilisées par ces applications. Pour intégrer toutes ces applications, la technique ATM doit satisfaire aux trois critères suivants : i) offrir le débit nécessaire à toute application connectée, ii) garantir le niveau de qualité de service requis par toute application connectée, iii) optimiser l'utilisation des ressources disponibles dans le réseau.

Les deux premiers points permettent d'établir les besoins d'une application donnée, qui après avoir été négociés et acceptés par le réseau lors de la procédure d'appel, constituent ce qui est appelé le contrat de trafic entre l'usager, qui est l'utilisateur de l'application envisagée, et le réseau. Ce contrat qui est défini par les deux interfaces appelées dans le domaine de la technique UNI (User Network Interface), entre le réseau et chacune des deux applications définit les caractéristiques de trafic de l'application source et la qualité de service QoS requise pour son bon fonctionnement. Ce contrat garantit à l'application source la qualité de service QoS demandée si celle-ci respecte les caractéristiques de trafic qu'elle a négociées au moment de l'appel.

La présente invention s'applique pour l'essentiel au mode de transfert dit à partage des ressources disponibles ou ABR (Available Bit Rate). Ce mode de transfert ATM est généralement destiné aux applications capables d'adapter leur débit d'émission de cellules en cours de connexion. Parmi ces applications, on va par exemple trouver des applications de transfert de données: interconnexion ou émulation de réseaux locaux du type dit LAN (Local Area Network), ou encore l'accès à des données distantes.

Ce mode de transfert dont les mécanismes de contrôle sont mis en oeuvre au niveau de la couche ATM du réseau a notamment été développé dans l'objectif d'utiliser plus efficacement la bande passante disponible dans un réseau ATM tout en garantissant un débit et un niveau de qualité de service QoS suffisants au bon fonctionnement des applications connectées.

Ce mode ABR est d'abord un protocole de communication qui, pour une connexion établie entre un terminal source et un terminal destinataire, permet de partager avec d'autres connexions les ressources disponibles dans chacun des éléments du réseau traversé par ladite connexion. Ces ressources disponibles correspondent à la somme des débits qui n'est utilisée par aucune des connexions sur l'élément considéré. Pour effectuer ce partage, le débit de chacune des sources qui fonctionnent également dans ce mode ABR est régulé en fonction, d'une part, de la quantité de ressources disponibles dans chaque élément de réseau et, d'autre part, du partage qui en est fait entre les connexions fonctionnant également selon le mode ABR. Le mode ABR fait donc intervenir un mécanisme de contrôle du débit des seules sources qui fonctionnent en mode ABR en fonction du débit alloué par les éléments de réseau pour chaque connexion fonctionnant dans ce mode. Ce mécanisme de contrôle permet d'ajuster dynamiquement le débit des sources en fonction des ressources qui sont disponibles dans le réseau.

Ce mécanisme est le suivant. Chaque source émet périodiquement une cellule de gestion de ressources aller encore appelée dans le domaine de la technique FW-RM comme "Forward-Ressource Management" et est retournée par l'application destinataire sous la forme d'une cellule de gestion de ressources retour encore appelée BW-RM comme "Backward-RM". Chaque élément de réseau traversé par l'une ou l'autre cellule a la possibilité de lui indiquer explicitement en chargeant un mot approprié dans un de ses champs, son état de congestion. Cette état se présente sous la forme d'un débit noté par la suite ER, comme Explicit Rate. Après cet aller et retour, la cellule B-RM porte des directives de congestion qui permettent à la source d'adapter la valeur de son débit, par exemple entre une valeur minimum MCR et une valeur maximum PCR (respectivement Minimum Cell Rate et Peak Cell Rate) qui ont été négociées dans le contrat de trafic.

Ainsi, le débit réel d'émission de chaque source est contrôlé afin de vérifier qu'elles ne dépassent pas le débit qui lui a été réservé dans le réseau. En effet, si une source malveillante émet à un débit supérieur à celui qui lui a été alloué ou autorisé, elle peut venir saturer les capacités des éléments de réseau. Elle met ainsi en péril le transfert d'informations et donc la qualité de service de toutes les autres connexions qui traversent les mêmes éléments de réseau.

Ce contrôle est appelé contrôle de conformité et est mis en oeuvre à l'interface entre le réseau et une source, soit à l'interface UNI (User-Network Interface) au moyen d'un opérateur dit UPC (Usage Parameter Control), soit à l'interface NNI (Network-Network Interface) au moyen d'un opérateur dit NPC (Network Parameter Network). Il est mis en oeuvre au moyen d'un algorithme de contrôle de conformité qui est appelé, de manière générale GCRA comme Generic Cell Rate Algorithm. Appliqué au mode de transfert ABR pour lequel, comme on vient de le voir, le débit réservé change tout au long de la connexion en fonction des ressources disponibles dans les éléments de réseau, il est appelé algorithme DGCRA comme Dynamic Generic Cell Rate Algorithm.

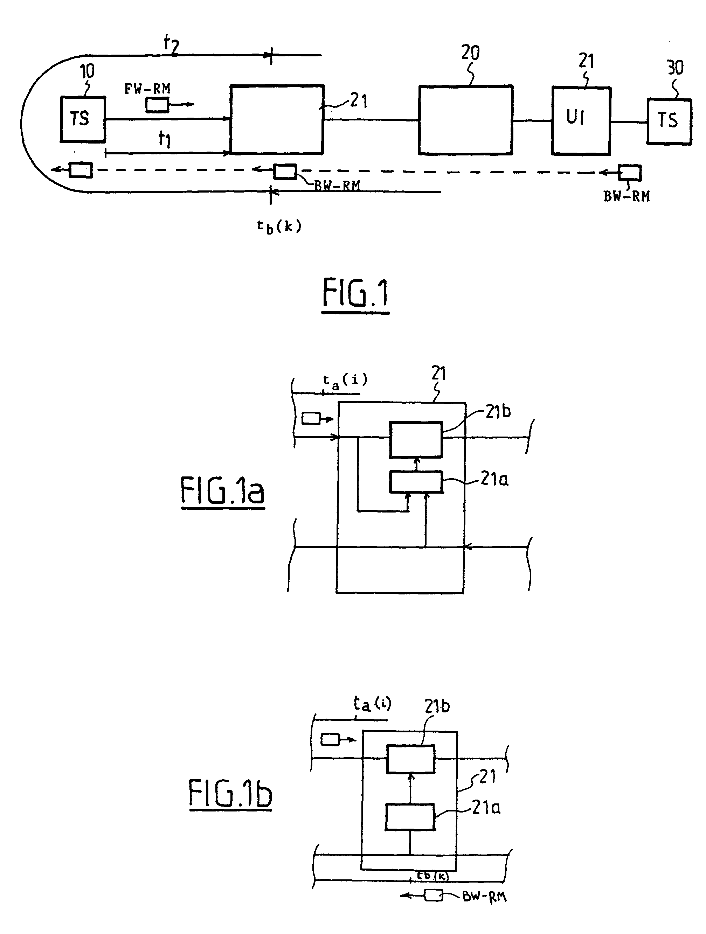

A la Fig. 1, on peut voir un premier terminal 10, dit terminal source, connecté à un réseau 20. Un second terminal 30, dit terminal destinataire est connecté également au réseau 20. Dans la suite de cette description, on supposera que les terminaux 10 et 30 sont en communication l'un avec l'autre. De plus, ils sont l'un et l'autre du type fonctionnant en mode ABR à partage de ressources. Un canal virtuel est donc établi entre eux pour permettre la transmission de cellules de données émises par le terminal source 10. Des unités d'interface usager-réseau 21 (dit UNI dans le domaine de la technique) sont prévues entre le réseau 20 et les terminaux 10, 30. C'est dans ces unités 21 que sont mises en oeuvre les fonctions des opérateurs UPC ainsi que l'algorithme DGCRA qui est maintenant décrit en relation avec la Fig 1.

On notera que le réseau 20 peut être constitué de plusieurs réseaux interconnectés par l'intermédiaire d'unités d'interface réseau-réseau (non représentées) qui sont dits, dans le domaine de la technique, NNI qui mettent en oeuvre les fonctions des opérateurs NPC ainsi que l'algorithme DGCRA.

Bien que chaque terminal usager peut être à la fois émetteur et récepteur de cellules de données, on considérera, par simplification un terminal source 10 qui émet des cellules de données vers un terminal destination 30. Les cellules de données, émises du terminal source 10, étant contrôlées à l'interface usager - réseau (UNI) 21 entre la source 10 et le réseau 20 ou encore à l'interface réseau - réseau (NNI) entre deux domaines différents, si c'est le cas.

Ainsi, pour la mise en oeuvre de cet algorithme, le terminal source 10 émet périodiquement une cellule de gestion de ressources allée FW-RM à destination du terminal 30, lequel renvoie une cellule de gestion de ressources retour BW-RM à destination du terminal 10. Il émet par exemple une cellule de gestion de ressources toutes les 32 cellules de données. Les indications de congestion concernant les éléments traversés par la connexion sont remontées par les cellules BW-RM qui informent ainsi l'unité 21 côté terminal source du nouveau débit maximum alloué par les éléments du réseau. Le terminal source 10 est, à la réception de la cellule de gestion de ressources B-RM, informé de ce nouveau débit. Généralement, il n'applique le nouveau débit qu'à partir des prochaines cellules générées qui n'atteignent alors l'unité d'interface 21 qu'après un délai correspondant au temps de propagation des cellules entre le terminal source et l'unité d'interface 21.

On comprendra qu'il n'est pas possible d'appliquer, dans la fonction de contrôle du flux de cellules de données émis par le terminal 10, un changement de débit dès la réémission de la cellule de gestion de ressources retour BW-RM par l'unité d'interface 21. Il faut, en effet, attendre, d'une part, le temps pour que le terminal source 10 prenne connaissance du nouveau débit, temps correspondant au temps de propagation entre l'unité d'interface 21 et le terminal source 10 et, d'autre part, le temps pour que les cellules de données émises par le terminal 10 en respectant ce nouveau débit arrivent à l'unité d'interface 21, temps qui correspond alors au temps $t_1$ de propagation entre le terminal source 10 et l'unité d'interface 21. Le temps total d'attente correspond donc à un temps d'aller et retour $t_2$, dit également Round Trip Time (RTT), de propagation entre l'unité d'interface et le terminal source 10.

Ces temps de propagation dans le réseau en amont de l'interface varient en fonction de la charge du terminal source 10 et du réseau d'accès. Néanmoins, la variation du délai de propagation $t_1$ entre le terminal source 10 et l'unité d'interface 21 peut être borné supérieurement par la variation du délai de cellule CDV (Cell Delay Variation) (notée également $\tau_1$) tolérée à l'unité d'interface 21 qui est fixe pour la plage de débits compris entre le débit minimum MCR et le débit maximum PCR.

Quant au temps de propagation aller et retour $t_2$, il est compris entre les délais aller et retour maximum $\tau_2$ et minimum $\tau_3$. Ainsi, un changement de débit va être effectif à l'unité d'interface 21 dans un intervalle de temps compris entre $[\tau_3, \tau_2]$ après le départ de la cellule de gestion de ressources BW-RM correspondante de l'unité d'interface 21.

Différents algorithmes de conformité DGCRA ont été proposés. Le premier fut l'algorithme DGCRA dit A décrit au forum ATM par Berger & al.

A l'arrivée au temps noté $t_a(i)$ d'une cellule de données d'ordre i émise par le terminal source 10, l'algorithme DGCRA A va déterminer, selon un premier processus de programmation représenté par une boîte 21a à la Fig. 1a, le débit de contrôle qu'il va appliquer dans un second processus de contrôle représenté par une boîte 21b à la Fig. 1a.

Pour ce processus de programmation, l'algorithme de conformité DGCRA A, pour chaque cellule de données d'ordre i arrivant à l'unité d'interface 21, au temps $t_a(i)$, met en oeuvre une fonction de recherche du débit de valeur maximum dans une liste de demandes de débit. Chaque demande de débit de cette liste correspond à une demande portée par une cellule de gestion retour BW-RM arrivée précédemment à l'unité d'interface 21. Cette cellule BW-RM est partie de l'unité d'interface 21 à un temps précédent qui se trouve dans un intervalle de temps compris entre le temps actuel diminué du délai maximum aller-retour $\tau_2$ et le temps actuel diminué du délai minimum aller-retour $\tau_3$.

Quant au processus de contrôle 21b, il applique le débit de contrôle $ACR(t_a(i))$ à la cellule i arrivée à l'unité d'interface 21 au temps $t_a(i)$ qui est défini par:

$$ACR(t_a(i)) = MAX(ER(i_{max}), ER(j))$$

où $ER(i_{max})$ correspond au débit porté par la cellule BW-RM d'ordre $i_{max}$ partie de l'unité d'interface 21 au temps $tb(i_{max})$ précédent le temps $(t_a(i)-\tau_2)$ et $ER(j)$ représente l'ensemble des valeurs de débit portées par les cellules B-RM parties de l'interface aux temps $tb(j)$ tel que $t_a(i) - \tau_2 < tb(j) < t_a(i) - \tau_3$.

Alors qu'il peut n'y avoir qu'un seul changement de débit pour chaque cellule BW-RM et qu'une cellule de gestion de ressources RM n'est émise qu'une toutes les 32 cellules de données, l'algorithme DGCRA décrit ci-dessus recalcule à chaque arrivée d'une cellule de données le débit à appliquer au processus de contrôle de conformité.

Il détermine le débit à contrôler à un instant donné en recherchant dans une liste les demandes de changements de débit survenues dans le passé. Comme il ne programme pas dans le futur les dates de changements de débit, il ne sait pas *a priori* quand commencera et finira l'application d'un débit particulier au contrôle de conformité du flux de cellules. De ce fait, l'algorithme A recalcule un débit à contrôler à chaque nouvelle arrivée d'une cellule de données à l'unité d'interface aux instants $t_a(k)$. Cependant, un changement de débit est conditionné uniquement par le départ de l'unité d'interface d'une cellule de gestion de ressources retour B-RM, dont la fréquence est beaucoup plus faible que celle des cellules de données (par défaut: une cellule RM pour 32 cellules de données). La détermination de la valeur du débit à contrôler pour chaque arrivée d'une cellule de données complexifie fortement la réalisation d'un tel processus.

De plus, l'algorithme A utilise une liste non bornée d'événements qui correspondent aux indications de changements de débit survenues pendant le délai maximum de propagation RTT $\tau_2$. Lors d'une implémentation de cet algorithme, il sera nécessaire de limiter physiquement la taille de la mémoire nécessaire au stockage des informations de demande de débit $(ER(j),t_b(j))$. Comme cet algorithme ne définit pas de règles de réduction du nombre d'informations pertinentes stockées, il n'est pas robuste contre d'éventuels débordements de ladite mémoire. Lorsque le nombre de changements de débit survenus sur une durée $\tau_2$, dépasse la capacité de stockage de la mémoire, certains changements de débit peuvent être perdus et provoquer ainsi un contrôle de conformité défaillant. Par exemple, si l'on perd une demande de débit correspondant à une augmentation de débit, le contrôle de conformité peut alors s'effectuer à un niveau bas de débit provoquant inopportunément la destruction des cellules de données transmises à débit supérieur à ce niveau mais conformes à l'indication d'augmentation de débit.

Pour résoudre ce problème, on a prévu des algorithmes à deux mémoires. Ces algorithmes gèrent une liste des débits à programmer dans le futur. Cette liste est limitée à deux demandes de changement de débit.

L'inconvénient majeur de ces algorithmes concerne leur faible capacité à enregistrer les demandes de changement de débit survenues dans un intervalle de temps donné. Lorsque plus de deux demandes de changements interviennent dans un intervalle de temps $\tau_2$, les algorithmes à deux mémoires effectuent une sélection des débits à programmer. Cette sélection produit une élimination de certains débits qui provoque une surévaluation du débit contrôlé. Cette surévaluation peut être fréquente lorsque les délais de propagation entre la source et l'unité d'interface sont grands par rapport au temps entre deux cellules de gestion de ressources RM. Ceci est le cas lorsque la fonction de contrôle est loin de la source, ce qui est le cas des fonctions NPC (Network Parameter Control). De plus, la surévaluation peut être importante lorsque les ressources disponibles dans le réseau varient beaucoup d'une cellule de gestion de ressources RM à la suivante. En conséquence, le contrôle de conformité peut être réalisé à un niveau de débit supérieur à celui réellement autorisé par le réseau. Un autre algorithme est décrit dans GB 2 301 977.

Le but de l'invention est de proposer un procédé de contrôle de la conformité d'un flux de cellules de données émis par une source fonctionnant dans un mode à partage de ressources disponibles ABR qui soit implémentable de manière plus simple que pour l'algorithme A et dont le comportement soit le plus proche du comportement de référence donné par cet algorithme A. Le but est donc de prévoir un tel procédé qui permette de contrôler beaucoup plus strictement et précisément le débit des sources ABR que les algorithmes de l'art antérieur, notamment des algorithmes à deux mémoires. Il est ainsi d'assurer une meilleure protection du réseau contre des sources malveillantes qui chercheraient à émettre à des débits supérieurs à celui autorisé.

Afin d'atteindre ces buts, un procédé de contrôle de la conformité du débit des cellules de données émises par un terminal source en communication avec un terminal destinataire selon l'invention est caractérisé en ce que ledit processus de programmation consiste, à l'arrivée d'une cellule de gestion de ressources retour à ladite unité d'interface, à déterminer la date, dite date de programmation $(t_p(k))$, de la prise en compte par ledit processus de contrôle de la demande de débit contenue dans le champ de ladite cellule, ladite date de programmation étant égale à ladite date d'arrivée ($t_b$(k)) retardée du délai minimum aller-retour ($\tau_3$) entre l'interface et le terminal, dite date de programmation la plus proche, lorsque ladite prise en compte à cette date de programmation la plus proche aboutit à une augmentation de débit programmé et étant supérieur au temps de programmation le plus proche et inférieur à ladite date d'arrivée ($t_b$(k)) retardée d'un délai maximum aller-retour ($\tau_2$), ($t_b$(k) + $\tau_2$) étant dite date de programmation la plus éloignée, si sa prise en compte audit temps de programmation le plus proche ($t_b$(k) + $\tau_3$) avait abouti à une diminution de débit et, à transmettre, à l'échéance du temps de programmation ($t_p$(k)), ladite valeur de débit à contrôler (ACR(tp(k))) audit processus de contrôle pour contrôle du flux émis par ledit terminal source.

Selon une autre caractéristique de l'invention, il consiste à tenir une liste d'événements de programmation, chaque événement étant défini par un couple de valeur dont la première représente une valeur de débit ACR($t_p$(k)) et dont la seconde représente la date de programmation $t_p$(k) de ladite valeur de débit ACR($t_p$(k)), et ladite liste étant ordonnée suivant ladite date de programmation des événements.

Selon une autre caractéristique de l'invention, il consiste pour connaître le débit programmé (ACR($t_p^-$(k))) à la date d'arrivée $t_b$(k) retardée de la durée minimale d'aller retour $\tau_3$ ($t_p^-$(k) = $t_b$(k) + $\tau_3$), à définir une fonction ACR(*l*,t) qui, à partir des événements présents dans la liste *l*, détermine la valeur du débit programmé à un temps quelconque t de la manière suivante :

si, dans ladite liste *l*, il existe au moins un événement de programmation {ACR($t_p$), $t_p$} prévu à un temps de programmation $t_p$ compris entre le temps présent $t_0$ et le temps t, ladite valeur est égale au débit de programmation de cet événement ACR($t_p$) et, s'il y en a plusieurs, elle est égale au débit de programmation du dernier de ces événements, et si, toujours dans cette liste, il n'existe pas d'événements programmés entre le temps présent $t_0$ et t, ladite valeur est égale à la valeur du débit contrôlé actuellement dans le processus de contrôle.

Selon une autre caractéristique de l'invention, il consiste à :

à l'arrivée à l'unité d'interface (21) auquel est connecté ledit terminal source, d'une cellule de gestion de ressources retour (BW-RM) de numéro de référence (k), à comparer le débit (ER(k)) que porte ladite cellule avec le débit programmé (ACR(*l*,$t_p^-$(k))) à l'instant de programmation le plus proche, puis si ladite comparaison effectuée à chaque arrivée d'une cellule de gestion de ressources (BW-RM) montre que le débit demandé ER(k) est supérieur au débit programmé au temps de programmation le plus proche (ACR(*l*,$t_p^-$(k))), supprimer, de ladite liste *l*, tout événement de programmation de débit prévu à un temps supérieur ou égal au temps de programmation le plus proche ($t_p^-$(k)) et rajouter, dans ladite liste *l*, un événement dont le débit contrôlé est égal à la valeur du débit ER(k) portée par ladite cellule et dont le temps de programmation est le temps de programmation le plus proche ($t_p^-$(k) = $t_b$(k) + $\tau_3$),

si ladite comparaison montre que le débit demandé ER(k) est égal au débit programmé ACR(*l*,$t_p^-$(k)) au temps programmation le plus proche, supprimer, de la liste *l*, tout événement de programmation de débit dont le temps de programmation est supérieur au temps de programmation le plus proche ($t_p^-$(k) = $t_b$(k) + $\tau_3$),

si ladite comparaison montre que le débit demandé ER(k) est inférieur au débit programmé ACR(*l*,$t_p^-$(k)), rechercher, dans ladite liste *l*, s'il existe un événement dont le temps de programmation ($t'_p$) est le plus petit temps de programmation dans la liste supérieur au temps le plus proche et dont le débit est inférieur ou égal au débit demandé ER(k),

si cette recherche montre que cet événement n'existe pas, rajouter, dans la liste *l*, un événement dont le débit est égal à la valeur du débit demandé ER(k) et dont le temps de programmation est le temps de programmation le plus éloigné ($t_p^+$(k) = $t_b$(k) + $\tau_2$) et,

si cette recherche montre que cet événement existe, supprimer, de la liste *l*, tout événement de programmation dont le temps de programmation est supérieur ou égal au temps de programmation ($t'_p$) dudit événement ainsi trouvé et rajouter, dans la liste *l*, un événement dont le débit est égal à la valeur du débit demandé ER(k) et dont le temps de programmation est égal au temps de programmation dudit événement trouvé ($t'_p$),

et, à changer le débit de contrôle du processus de contrôle (21b) avec le débit du premier événement {ACR(1), $t_p$(1)} programmé dans la liste d'événements de programmation lorsque le temps de programmation $t_p$(1) dudit premier événement arrive à échéance.

Selon une autre caractéristique de l'invention, il consiste à limiter le nombre d'événements stockés dans ladite liste *l* à un nombre fini N d'événements égal ou supérieur à deux, et, avant de rajouter un nouvel événement dans ladite liste, à vérifier si le nombre d'événements contenus dans ladite liste n'est pas supérieur audit nombre fini et, dans ce cas, à mettre alors en oeuvre une fonction de réduction du nombre d'événements contenus dans la liste.

Selon une autre caractéristique de l'invention, ladite fonction de réduction consiste, lorsque le débit demandé (ER(k)) que porte la cellule de gestion de ressources retour (BW-RM) d'ordre k arrivée à l'instant ($t_b$(k)) est égal au débit programmé (ACR(*l*,$t_p^-$(k))) à l'ins-

tant de programmation le plus proche $(t_p^-(k)=t_b(k)+\tau_3)$, à supprimer, de la liste 1, tout événement de programmation de débit dont le temps de programmation est supérieur ou égal au temps de programmation le plus proche $(t_p^-(k)=t_b(k)+\tau_3)$ et à rajouter dans la liste 1 un événement dont le débit est égal à la valeur du débit (ER (k)) porté par ladite cellule de gestion de ressources retour (BW-RM) et dont le temps de programmation est le temps de programmation le plus proche $(t_p^-(k)=t_b(k)+\tau_3)$.

Selon une autre caractéristique de l'invention, il consiste, lors du rajout dans la liste d'un événement pour un temps correspondant au temps le plus proche $(t_p^-(k)=t_b(k)+\tau_3)$, à vérifier, avant de rajouter ledit événement, si le nombre d'événements dans la liste 1 est égal audit nombre fini N et si le temps de programmation du dernier événement dans la liste $(t_p(N))$ est inférieur ou égal au temps de programmation le plus proche $(t_p^-(k)=t_b(k)+\tau_3)$, à définir le temps de programmation de l'événement à rajouter $(t_p(k))$ comme étant égal audit temps de programmation du dernier événement de la liste, à supprimer le dernier événement de la liste, et à rajouter ledit événement à rajouter à la place du dernier événement dans la liste l, sinon, si le nombre d'événements dans la liste est inférieur audit nombre fini N, à définir le temps de programmation de l'événement à rajouter comme étant égal au temps de programmation le plus proche $(t_p^-(k)=t_b(k)+\tau_3)$, et à rajouter ledit événement dans la liste.

Selon une autre caractéristique de l'invention, il consiste, lors d'un rajout d'un événement dans la liste pour un temps correspondant au temps le plus éloigné, à vérifier, avant de rajouter ledit événement, si le nombre d'événements dans la liste 1 est égal audit nombre fini N, si c'est le cas il consiste, à remplacer le temps de programmation $(t_p(k))$ de l'événement à rajouter par le temps de programmation du dernier événement de la liste $(t_{pl}(N)$ si le débit dudit événement à rajouter $(ER(k))$ est supérieur ou égal au dernier débit programmé dans la liste $ER(N)$, à programmer à la place de l'avant-dernier événement de la liste (d'ordre N-1), un événement dont le temps de programmation est celui de l'avant-dernier événement de la liste 1 $(ACR(N-1),(t_{pl}(N-1))$, et le débit est le plus grand débit des débits des deux derniers événements de la liste l $(ACR(N - 1) = Max(ACR(N - 1), ACR(N))$, puis à rajouter l'événement à rajouter à la place du dernier événement dans la liste l.

Selon une autre caractéristique de l'invention, il consiste, lors du rajout d'un événement dans la liste *l*, à vérifier si le nombre d'événements contenus dans la liste *l* ne dépasse pas ledit nombre fini, et si tel est le cas, à rechercher dans la liste *l* deux événements successifs pour lesquels le produit de l'augmentation ou de la diminution de débit par la mesure de l'intervalle de temps compris entre leurs deux temps de programmation soit minimum puis à leur substituer un événement dont le débit est le plus grand des deux débits et le temps de programmation est le premier des deux temps de programmation.

La présente invention concerne également une unité d'interface utilisateur-réseau qui comporte des moyens pour mettre en oeuvre, tout ou en partie, le procédé de l'invention tel qu'il vient d'être décrit.

Les caractéristiques et avantages de l'invention mentionnés ci-dessus ainsi que d'autres apparaîtront plus clairement à la lecture de la description suivante d'exemples de réalisation, ladite description étant faite en relation avec les dessins joints parmi lesquels :

la Fig. 1 est un schéma d'un réseau auquel s'applique la présente invention,
la Fig. 1a est un schéma explicatif des processus mis en oeuvre dans une unité d'interface utilisateur-réseau selon l'art antérieur,
la Fig. 1b est un schéma explicatif des processus mis en oeuvre dans une unité d'interface utilisateur-réseau selon l'invention,
la Fig. 2 est un organigramme illustrant un premier mode de réalisation d'un procédé de programmation selon l'invention,
la Fig. 3 est un diagramme illustrant le déroulement d'un procédé selon le premier mode de réalisation de l'invention pour un exemple de six cellules arrivant à l'interface utilisateur-réseau,
la Fig. 4 est un organigramme illustrant un second mode de réalisation d'un procédé de programmation selon l'invention,
la Fig. 5 est un diagramme illustrant le déroulement d'un procédé selon le second mode de réalisation de l'invention pour un exemple de huit cellules arrivant à l'interface utilisateur-réseau,
la Fig. 6 est un organigramme illustrant un troisième mode de réalisation d'un procédé de programmation selon l'invention, et
la Fig. 7 est un diagramme illustrant le déroulement d'un procédé selon le troisième mode de réalisation de l'invention pour un exemple de huit cellules arrivant à l'interface utilisateur-réseau.

A l'instar des procédés selon l'état de la technique, le procédé de contrôle de la conformité selon l'invention consiste à mettre en oeuvre, dans une unité 21 d'interface utilisateur-réseau, dite UNI dans le domaine de la technique (voir Fig. 1) ou, de même dans une unité d'interface réseau-réseau, dite NNI dans le domaine de la technique (non représentée), deux processus 21a et 21b qui sont exécutés indépendamment l'un de l'autre. Ces deux processus 21a et 21b tels qu'ils sont arrangés dans le cadre de la présente invention sont maintenant décrits en relation avec la Fig. 1b.

Le premier processus est un processus de contrôle 21b proprement dit qui vérifie que la cellule de donnée d'ordre i est, à son arrivée à l'unité d'interface 21 au temps $t_a(i)$, conforme aux paramètres de trafic que l'on écrit $(ACR(t_a(i)),\tau_1)$, où $ACR(t_a(i))$ est le débit à contrôler à l'instant de l'arrivée $t_a(i)$ de la cellule de donnée d'ordre i et $\tau_1$ la variation du délai cellule tolérée CDV associée. Ce premier processus ne fait pas à proprement partie de la présente invention et ne sera donc pas décrit plus en détail.

Le second processus est un processus de programmation représenté par une boîte 21a à la Fig. 1b qui, à l'arrivée au temps $t_b(k)$ d'une cellule de gestion de ressources retour BW-RM d'ordre k, détermine, à partir d'une demande de débit ER(k) qu'un champ de ladite cellule BW-RM contient, la valeur du débit à contrôler $ACR(t_p(k))$ à un instant futur $t_p(k)$ que l'on nommera, dans la suite de la description, temps de programmation. Au temps $t = t_p(k)$, le processus de programmation transmet cette valeur $ACR(t_p(k))$ au processus de contrôle 21b.

On rappelle que chaque cellule de gestion retour BW-RM comprend un champ spécifique qui porte une demande de débit que l'on notera, dans la suite de la description, ER(k), k étant l'ordre de ladite cellule.

Selon l'invention, une demande de débit qui correspond à une augmentation par rapport au débit programmé au temps $t_b(k)$ retardé du délai minimum aller-retour $\tau_3$, sera prise en compte au temps de départ $t_b(k)$ retardé du délai minimum aller-retour $\tau_3$. A l'inverse, une demande de débit qui correspond à une diminution par rapport au débit programmé au temps $t_b(k)$ retardé du délai minimum aller-retour $\tau_3$, sera prise en compte à un temps supérieur au temps de départ $t_b(k)$ retardé du délai minimum aller-retour $\tau_3$. Si en plus la demande de débit est inférieure à tous les débits programmés au delà du temps de départ $t_b(k)$ retardé du délai minimum aller-retour $\tau_3$, elle sera programmée au temps de départ $t_b(k)$ retardé du délai maximum aller-retour $\tau_2$.

Dans le premier cas, le changement effectué au contrôle du flux de données émis par le terminal source 10 (dans le sens aller) sera donc appliqué le plus tôt possible, c'est-à-dire à l'instant de programmation $t_p^-(k) = t_b(k) + \tau_3$. Ce temps de programmation sera appelé dans la suite de la description, temps de programmation le plus proche et on le notera $t_p^-(k)$.

Par contre, dans le dernier cas, ce changement sera appliqué le plus tard possible à l'instant de programmation $t_p^+(k) = t_b(k) + \tau_2$. Dans la suite de la description, on appellera temps de programmation le plus éloigné ce temps de programmation et on le notera $t_p^+(k)$.

Ainsi, le processus de programmation programme donc les changements de débit de contrôle sur la base de situations "pire cas" favorable à l'usager, en fonction du type de changement.

On notera que le processus de programmation 21a selon l'invention est mis en oeuvre à chaque arrivée d'une cellule BW-RM à l'unité d'interface 21. La complexité est donc diminuée par rapport aux processus de programmation de l'algorithme A de référence de l'art antérieur qui effectuent une programmation pour chaque cellule de données arrivant à l'unité d'interface, les cellules de données étant en nombre supérieur au nombre de cellules de gestion de ressources.

Dans la suite de la description, on notera donc le débit ACR(t) le débit contrôlé par l'unité d'interface 21 à l'instant t. Si le temps t est dans le futur, on préférera appeler ce débit "débit programmé à l'instant t".

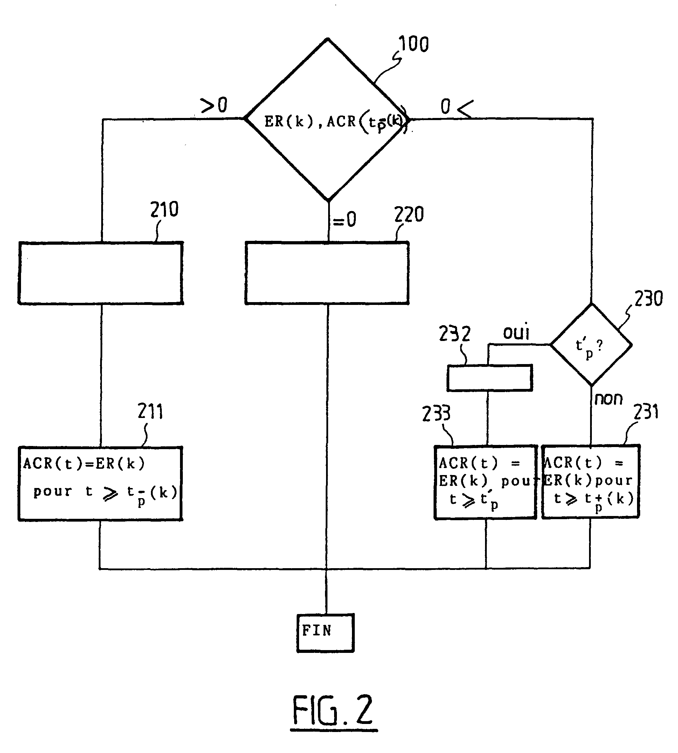

Le procédé de l'invention est maintenant décrit en relation avec la Fig. 2. A l'arrivée à l'unité d'interface d'une cellule de gestion de ressources retour BW-RM de numéro de référence k, on compare, à une étape 100, le débit demandé ER(k) qu'elle porte avec le débit programmé $ACR(l,t_p^-(k))$ à l'instant de programmation le plus proche correspondant donc au temps éloigné du temps de cette arrivée $t_b(k)$ de la durée minimale d'aller retour $\tau_3$ ($t_p^-(k) = t_b(k) + \tau_3$).

Si le débit demandé ER(k) est supérieur au débit programmé au temps de programmation le plus proche $ACR(l,t_p^-(k))$, alors, à l'étape 210, on supprime toute programmation de débit prévue au delà de ce temps de programmation $t_p^-(k)$ et, à l'étape 211, on programme le débit contrôlé à ce temps $t_p^-(k) = t_b(k) + \tau_3$ et au delà de ce temps à la valeur du débit demandé ER(k). On a donc ACR(t) pour $t \geq t_p^-(k)$ qui est égal à ER(k).

Si le débit demandé ER(k) est égal au débit programmé $ACR(l,t_p^-(k))$ au temps de programmation le plus proche, alors on supprime, à l'étape 220, toute programmation de débit prévue au delà du temps de programmation $t_p^-(k) = t_b(k) + \tau_3$.

Si le débit demandé ER(k) est inférieur au débit programmé $ACR(l,t_p^-(k))$, on recherche, à l'étape 230, s'il existe un changement de débit de programmation ER' pour un temps de programmation t'p qui soit, d'une part, à la fois supérieur et le plus proche du temps de programmation le plus proche $t_p^-(k) = t_b(k) + \tau_3$ et qui, d'autre part, corresponde à un changement vers un débit inférieur au débit demandé ER(k) (ER' $\leq$ ER(k)).

Si ce changement n'existe pas, on programme, à l'étape 231, le débit contrôlé au temps $t_p^+(k) = (t_b(k) + \tau2)$ et au delà de ce temps à la valeur du débit demandé ER(k). On a donc ACR(t) pour $t \geq t_p^+(k)$ qui est égal à ER(k).

Par contre, s'il existe, on supprime, à l'étape 232, toutes programmations prévues au delà du temps $t'_p$ de programmation de ce changement, c'est-à-dire pour lesquelles $t_p \geq t'_p$, et on programme, à l'étape 233, pour ce temps $t'_p$ et tout temps au delà, un débit égal au débit demandé ER(k). On a donc ACR(t) pour $t \geq t'_p$ qui est égal à ER(k).

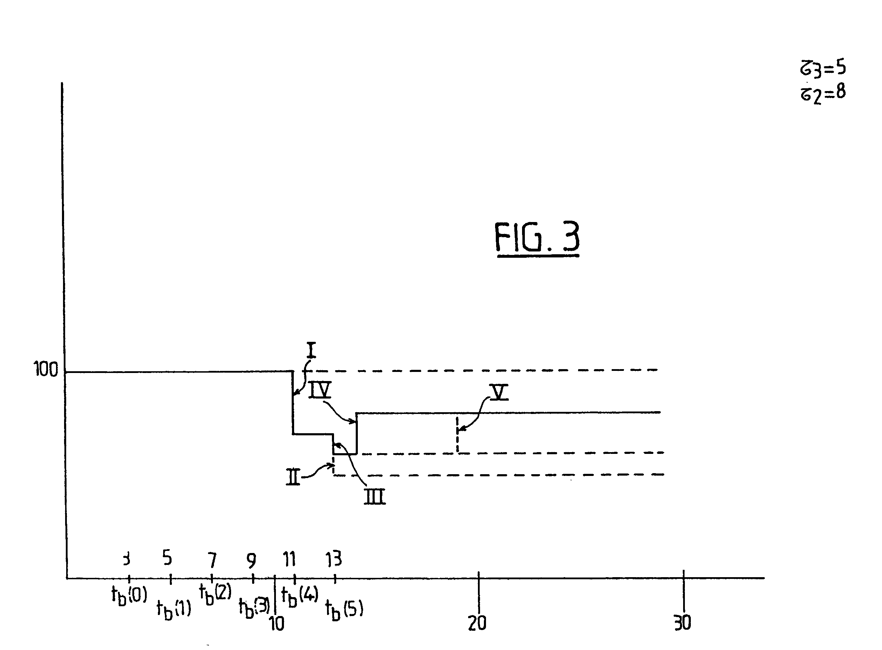

Pour illustrer ce procédé, on a construit le graphe de la Fig. 3 relative à un exemple de six arrivées de cellules de gestion de ressources BW-RM. Le délai minimum aller-retour $\tau_3$ est égal à 5 unités de temps alors que le délai maximum $\tau_2$ est égal à 8 unités de temps.

La première arrive au temps $t_b(0) = 3$ et porte le débit ER(0) = 70. Au temps t = 3, le temps de programmation le plus proche est le temps $t_b(0) + \tau_3 = 8$. A ce temps, le débit programmé est 100. En conséquence, le débit porté par la cellule 0 est inférieur au débit programmé au temps de programmation le plus proche. Par ailleurs, il n'y a pas de programmation à un débit inférieur à ER(0) qui soit prévue au delà du temps de programmation le plus proche. Il est résulte que l'on prévoit une programmation au débit de 70 pour le temps de programmation le plus éloigné soit tb(0) + $\tau_2$ = 11. On a marqué I l'échelon résultant.

Au temps, $t_b(1)$ = 5, la seconde cellule arrive en portant le débit ER(1) = 50. Au temps t = 5, le temps de programmation le plus proche est le temps $t_b(1)$ + $\tau_3$ = 10. A ce temps, le débit programmé est de 100. En conséquence, le débit porté par la cellule 1 est inférieur au débit programmé au temps de programmation le plus proche. Par ailleurs, il n'y a pas de programmation à un débit inférieur au débit ER(1) qui soit prévue au delà du temps de programmation le plus proche $t_b(1)$ + $\tau_3$ = 10. Il en résulte que l'on prévoit une programmation au débit de 50 pour le temps de programmation le plus éloigné soit $t_b(1)$ + $\tau_2$ = 13. On a marqué II l'échelon résultant.

Au temps, $t_b(2)$ = 7, la troisième cellule arrive en portant le débit ER(2) = 60. Au temps t = 7, le temps de programmation le plus proche est le temps $t_b(2)$ + $\tau_3$ = 12. A ce temps, le débit programmé est de 70. En conséquence, le débit porté par la cellule 2 est inférieur au débit programmé au temps de programmation le plus proche. Par ailleurs, on constate que la première programmation au delà du temps de programmation le plus proche et pour laquelle le débit est inférieur au débit demandé se trouve au temps $t_p'$ = 13. Il en résulte que l'on prévoit une programmation au débit de 60 pour le temps de programmation $t'_p$ = 13. On a marqué III l'échelon résultant.

Au temps, $t_b(3)$ = 9, la quatrième cellule arrive en portant le débit ER(3) = 80. Au temps t = 9, le temps de programmation le plus proche est le temps $t_b(3)$ + $\tau_3$ = 14. A ce temps, le débit programmé est de 60. En conséquence, le débit porté par la cellule 3 est supérieur au débit programmé au temps de programmation le plus proche. Il en résulte que l'on prévoit une programmation au débit de 80 pour le temps de programmation t = 14. On a marqué IV l'échelon résultant.

Au temps, $t_b(4)$ = 11, la cinquième cellule arrive en portant le débit ER(4) = 60. Au temps t = 11, le temps de programmation le plus proche est le temps $t_b(4)$ + $\tau_3$ = 16. A ce temps, le débit programmé est de 80. En conséquence, le débit porté par la cellule 4 est inférieur au débit programmé au temps de programmation le plus proche. Par ailleurs, il n'y a pas de programmation prévue au delà du temps de programmation le plus proche. Il est résulte que l'on prévoit une programmation au débit de 60 pour le temps de programmation le plus éloigné soit $t_b(4)$ + $\tau_2$ = 19. On a marqué V l'échelon résultant.

On notera qu'à ce temps d'arrivée de cellule égal à 11, le débit de contrôle est passé de 100 à 70 comme cela avait été précédemment programmé.

Au temps, $t_b(5)$ = 13, la sixième cellule arrive en portant le débit ER(5) = 80. Au temps t = 13, le temps de programmation le plus proche est le temps $t_b(3)$ + $\tau_3$ = 18. A ce temps, le débit programmé est déjà de 80. En conséquence, le débit porté par la cellule 5 est égal au débit programmé au temps de programmation le plus proche. Il en résulte que l'on supprime toute programmation au delà du temps de programmation le plus proche soit t = 18 et, en particulier, la programmation, marquée V, qui était prévue au temps t = 19.

On notera encore qu'à ce temps d'arrivée de cellule égal à 13, le débit de contrôle est passé de 70 à 60 comme cela avait été précédemment programmé.

Pour la mise en oeuvre du procédé, on a prévu de tenir une liste *l* d'événements de programmation chacun défini pour une cellule BW-RM d'ordre k, d'une part, par la date de programmation $t_p(k)$ et, d'autre part, par le débit à programmer à cette date ACR($t_p(k)$). L'indice p indique qu'il s'agit d'un temps de programmation et la référence k indique que cette date a été déterminée à l'arrivée de la cellule d'ordre k. Ainsi, on appelle un événement de programmation un couple de valeurs {ACR (t), t} où ACR(t) est le débit de contrôle qui est à programmer à un temps t.

Par ailleurs, on définit une fonction qui donne à un temps t quelconque, la valeur du débit de contrôle. Cette fonction est notée ACR(*l*, t) et est définie de la manière suivante :

si, dans la liste *l*, il existe au moins un événement de programmation {ACR($t_p$), $t_p$} prévu à un temps $t_p$ compris entre le temps présent $t_0$ et le temps t, elle est égale au débit de programmation de cet événement ACR($t_p$) et, s'il y en a plusieurs, elle est égale au débit de programmation du dernier de ces événements, et

si, toujours dans cette liste, il n'existe pas d'événements de programmés, la valeur de la fonction ACR (*l*, t) est égale à la valeur du débit de programmation actuel.

Par exemple, si l'on considère à un temps $t_0$ = 0, la liste suivante :

| 100 | 5 |
|-----|-----|
| 70 | 10 |
| 50 | 15 |

la fonction ACR(*l*, 3) $t_1$ = renvoie à la valeur du débit de programmation actuel qui est par exemple de 110. La fonction ACR(*l*, $t_1$ = 7) est égale au débit de programmation de l'événement qui se trouve entre le temps $t_0$ = 0 et le temps $t_1$ = 7, soit le temps $t_p(k)$ = 5. Cette valeur est donc 100. La fonction ACR(*l*, $t_2$ = 17) est égale au débit de programmation de l'événement qui se trouve entre le temps $t_0$ = 0 et le temps $t_2$ = 17 et qui est le plus proche du temps $t_2$ = 17. Il s'agit donc du temps $t_p(k)$ = 15 pour lequel le débit est 50. On a donc ACR(*l*, $t_2$ = 17) = 50.

Dans la suite de la description, on appellera la valeur de cette fonction ACR($l$, t), "débit programmé au temps t".

Le procédé de l'invention peut alors s'écrire, sous la forme de pseudo-code, de la façon suivante :

Pour tout instant $t_b(k)$ correspond à l'arrivée d'une cellule B-RM portant le débit ER(k) :

si ER(k) > ACR($l$, $t_p^-(k) = t_b(k) + \tau_3$) alors supprimer dans la liste ordonnée $l$ tous les événements de programmation {ACR(i), $t_p(i)$} tels que $t_p(i) \geq t_p^-(k)$ et rajouter l'événement {ACR($t_p(k)$), $t_p(k)$} avec ACR($t_p(k)$) = ER(k) et $t_p(k) = t_b(k) + \tau_3$.

si ER(k) = ACR($l$, $t_p^-(k)$) alors supprimer dans la liste ordonnée $l$ tous les événements de programmation {ACR($t_p(i)$), $t_p(i)$} tels que $t_p(i) > t_p^-(k)$.

si ER(k) < ACR($l$, $t_p^-(k)$) alors rechercher dans la liste l'événement {ACR', $t'_p$} de plus petit $t'_p$ tel que $t'_p > t_p^-(k)$ et ACR' ≤ ER (k), puis

- si l'élément {ACR', $t'_p$} existe alors supprimer dans la liste ordonnée $l$ tous les événements de programmation {ACR($t_p(i)$), $t_p(i)$} tels que $t_p(i) \geq t'_p$ et rajouter l'événement (ER(k), $t'_p$).
- si l'élément {ACR', $t'_p$} n'existe pas alors rajouter l'élément {ER(k), $t_p^+(k)$}.

A l'expiration de la date de programmation (t = $t_p(k)$), on procède aux opérations suivantes :

- égaliser le débit de contrôle ACR(t) au débit programmé ACR($t_p(k)$) pour cette date,

- supprimer de la liste $l$ l'événement correspondant {ACR($t_p(k)$), $t_p(k)$}.

On va reprendre l'exemple ci-dessus pour expliciter ce premier mode de réalisation avec une liste $l$ d'événements.

La première cellule BW-RM arrive au temps $t_b(0) = 3$ et porte le débit ER(0) = 70. On détermine la valeur de la fonction ACR($l$, $t_p(k) + \tau_3$) qui, puisqu'il n'y a pas d'événements de prévus dans la liste $l$, est égale à la valeur de débit de contrôle actuelle, soit, dans l'exemple donné 100.

Au temps t = 3, le débit porté par la cellule 0 est inférieur au débit programmé au temps de programmation le plus proche. Comme il n'y a pas de programmation prévue au delà du temps de programmation le plus proche, on place dans la liste $l$ l'événement {70, 11}.

Au temps, $t_b(l) = 5$, la seconde cellule arrive en portant le débit ER(l) = 50. Le temps de programmation le plus proche est égal à 10. Il n'y a donc pas de programmations de prévues entre le temps actuel égal à 5 et ce temps de programmation le plus proche égal à 10. En conséquence, la valeur de la fonction ACR($l$, $t_p^-(k)$)

est de nouveau égale à 100.

Ainsi, le débit porté par la cellule est encore inférieur au débit programmé au temps de programmation le plus proche. Comme il n'y a pas de programmation à un débit inférieur à ER(1) qui soit prévue au delà du temps de programmation le plus proche, on ajoute dans la liste l'événement {50, 13}. La liste $l$ est maintenant la suivante :

| 70 | 11 |
|----|----|
| 50 | 13 |

Au temps, $t_b(2) = 7$, la troisième cellule arrive en portant le débit ER(2) = 60. Le temps de programmation le plus proche est égale à $t_b(2) + \tau_3 = 12$. L'événement de programmation {70, 11} est prévu entre le temps actuel et le temps de programmation le plus proche. Donc la fonction ACR($l$, $t_p(k) + \tau_3$) est égal à 70. Il en résulte que le débit porté par la cellule BW-RM est inférieur à la valeur de cette fonction. Par ailleurs, le premier événement prévu au delà du temps de programmation le plus proche et pour lequel le débit est inférieur au débit demandé se trouve au temps $t_p' = 13$. On supprime donc de la liste $l$ l'événement {50, 13} et on y ajoute l'événement {60, 13}. La liste est maintenant la suivante :

| 70 | 11 |
|----|----|
| 60 | 13 |

Au temps, $t_b(3) = 9$, la quatrième cellule arrive en portant le débit ER(3) = 80. Au temps t = 9, le temps de programmation le plus proche est le temps tb(3) + $\tau_3$ = 14. On comprendra que la fonction ACR est égale à 60. En conséquence, le débit porté par la cellule est supérieur à cette valeur. On ajoute donc à la liste $l$ l'événement {80, 14}.

La liste $l$ devient la suivante :

| 70 | 11 |
|----|----|
| 60 | 13 |
| 80 | 14 |

Au temps t = 11, le débit de contrôle ACR(t) devient égal à 70 et l'événement correspondant de la liste $l$ y est retiré. La liste $l$ devient :

| 60 | 13 |
|----|----|
| 80 | 14 |

Par ailleurs, à ce temps, la cinquième cellule arrive en portant le débit ER(4) = 60. Le temps de programmation le plus proche est le temps tb(3) + $\tau_3$ = 16. La fonction ACR est alors égale à 80. En conséquence, le débit porté par la cellule 4 est inférieur à cette valeur. Par ailleurs, il n'y a pas, dans la liste *l*, d'événement prévu pour un temps au delà du temps de programmation le plus proche. Il est résulte que l'on ajoute à la liste *l* l'événement {60, 19}. La liste *l* devient :

| 60 | 13 |
|----|----|
| 80 | 14 |
| 60 | 19 |

Au temps t = 13, le débit de contrôle ACR(t) devient égal à 60 et le premier événement de la liste *l* y est retiré. La liste *l* devient donc:

| 80 | 14 |
|----|----|
| 60 | 19 |

A ce temps, la quatrième cellule arrive en portant le débit ER(5) = 80. Le temps de programmation le plus proche est le temps tb(3) + $\tau_3$ = 18. Il existe un événement entre le temps présent et le temps de programmation le plus proche qui est l'événement {80, 14}. La fonction ACR est donc égale à 80. Le débit porté par la cellule 5 est donc égal à cette valeur. Il en résulte que l'on supprime de la liste tout événement prévu à des temps au delà du temps de programmation le plus proche soit t = 18 et, en particulier, l'événement {60, 19}. La liste devient donc :

| 80 | 14 |
|----|----|

On peut montrer mathématiquement que le procédé qui vient d'être décrit donne le même comportement que l'algorithme A de l'art antérieur.

Pour éviter des débordements des files de mémoire dans lesquelles la liste d'événements est enregistrée, on a cherché à améliorer le procédé ci-dessus décrit de manière à limiter le nombre d'éléments qu'elle contient. On a donc cherché à limiter ce nombre d'éléments à N événements de programmation {ER(i), $t_p$(i)} et pour ce faire, on va définir une règle de réduction qui sera mise en oeuvre par défaut lorsque N + 1 éléments se trouveront dans la liste *l* et qui aura pour objet d'éliminer un événement de la liste *l*.

La contrainte à respecter pour les règles de réduction à N programmations pour l'algorithme générique consiste à fournir une trace de débit à contrôler supérieure à celle qui serait fournie par l'algorithme de référence A ou l'algorithme générique sans limitation de mémoire. Ainsi, il est possible d'envisager tout type de règle de réduction à N programmations à condition que cette contrainte soit respectée.

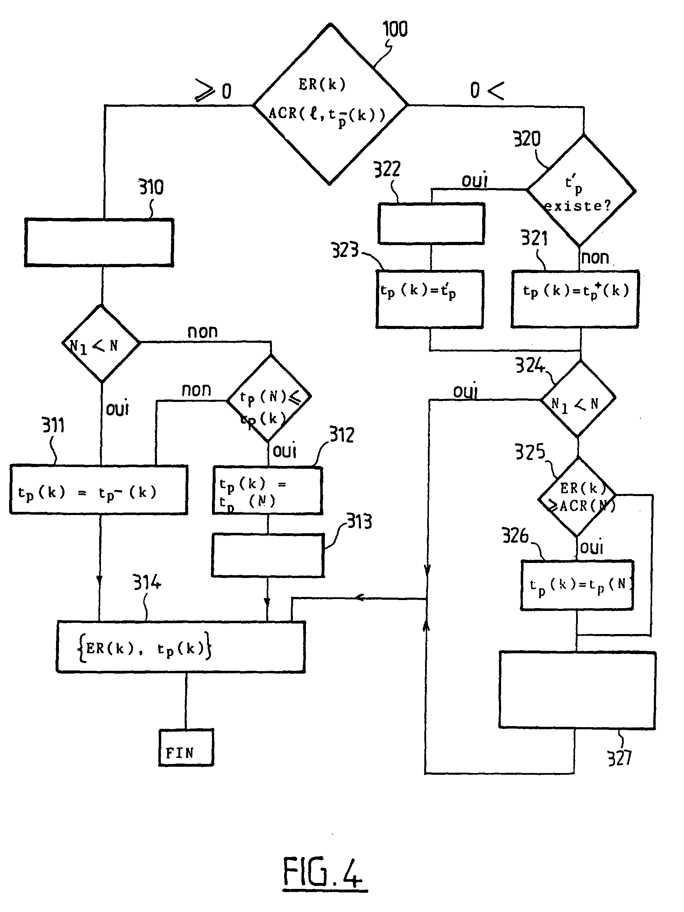

On décrit ci-après, en relation avec la Fig. 4, un premier mode de réalisation d'un procédé selon l'invention dont la liste est limitée à N éléments. Selon ce mode, comme dans le mode de réalisation précédent, on compare, à l'étape 100, le débit demandé ER(k) porté par la cellule de gestion de ressources BW-RM d'ordre k qui arrive à l'instant $t_b$(k) à l'unité d'interface 21 à la valeur prise par la fonction ACR(*l*, $t_b$(k) + $\tau_3$). Cette fonction est identique à celle qui a été précédemment décrite.

Suite à cette comparaison, si le débit demandé ER(k) est supérieur ou égal au débit programmé au temps de programmation le plus proche ACR(*l*, $t_b$(k) + $\tau_3$), alors, comme précédemment on supprime, à l'étape 310, de la liste *l*, tous les éléments de programmation prévus à un temps égal ou supérieur au temps de programmation le plus proche ($t_b$(k) + $\tau_3$).

Si la liste *l* n'est pas pleine, c'est-à-dire si le nombre d'éléments de programmation $N_l$ contenus dans la liste *l* est inférieur au nombre limite N, le temps de programmation $t_p$(k) est, comme précédemment, égal au temps de programmation le plus proche $t_p$(k) = $t_b$(k) + $\tau_3$ (voir étape 311).

Par contre, si la liste est pleine (le nombre d'éléments $N_l$ dans la liste est égal à N), alors si le temps de programmation $t_{pl}$(N) du dernier événement de la liste *l* (c'est-à-dire de l'événement dont le temps de programmation, noté $t_{pl}$(N), est le plus éloigné) est inférieur ou égal au temps de programmation le plus proche $t_p^-$(k), le temps de programmation $t_p$(k) devient égal au temps de programmation $t_{pl}$(N) du dernier élément enregistré dans la liste (étape 312). De plus, on supprime de la liste, le dernier élément enregistré dans la liste {ACR(N),$t_{pl}$(N)}(étape 313).

Si le temps de programmation $t_{pl}$(N) du dernier élément de la liste est supérieur au temps de programmation le plus proche $t_p^-$(k), le temps de programmation $t_p$(k) devient égal au temps de programmation le plus proche $t_p$(k) = $t_p^-$(k)(voir étape 311).

A la suite de ces opérations, l'élément {ACR($t_p$(k)),$t_p$(k)} avec ACR($t_p$(k)) = ER(k) est enregistré, à l'étape 314, dans la liste *l*.

La notation suivie ici correspond à l'utilisation d'une liste dont les événements sont ordonnés selon l'ordre croissant des temps de programmation que l'on note $t_{pl}$, avec p signifiant programmation et l signifiant présent dans la liste. Ainsi, pour une liste *l* de dimension N, le dernier événement est celui d'ordre N. Le premier événement de liste *l* est celui d'ordre 1 et correspond à l'événement dont le temps de programmation $t_{pl}$ est le plus petit de la liste *l*. De manière générale, l'événement d'ordre X est noté {ACR(X),$t_{pl}$(X)}.

Si le débit demandé ER(k) est inférieur au débit programmé ACR($t_p^-$(k),*l*), on recherche dans la liste *l*, à l'étape 320, s'il existe, l'événement {ACR($t'_p$), $t'_p$} programmé à un temps $t'_p$ au delà du temps de programmation le plus proche $t_p^-$(k) pour un débit ACR($t'_p$) inférieur ou égal au débit demandé ER(k). Au cas où il existerait plusieurs événements {ACR($t'_p$), $t'_p$}, on recherchera seulement celui qui a le plus petit des temps $t'_p$.

Si cet événement n'existe pas, le temps de

programmation $t_p(k)$ devient égal au temps de programmation le plus éloigné $t_p^+(k) = t_b(k) + \tau_2$ (étape 321).

Par contre, si cet élément $\{ACR(t'_p), t'_p\}$ existe, on supprime de la liste *I*, à l'étape 322, tout événement programmé à un temps égal et au delà du temps de programmation $t_p'$ de cet événement. De plus, on égalise, à l'étape 323, le temps de programmation $t_p(k)$ au temps de programmation $t_p'$ de cet élément.

On vérifie, à l'étape 324, si le nombre d'éléments de programmation présents dans la liste *I* est inférieur ou s'il est égal à N.

Si la liste *I* est pleine (N éléments de programmation se trouvent dans la liste *I*) (étape 325), alors si le débit demandé ER(k) est supérieur ou égal au débit de programmation ACR(N) du dernier élément enregistré dans la liste *I*, on modifie, à l'étape 326, le temps de programmation $t_p(k)$ pour qu'il devienne égal au temps de programmation $t_{pI}(N)$ de cet élément.

L'avant-dernier élément de la liste est modifié à l'étape 327 de manière que son débit ACR(N-1) soit la plus grande des deux valeurs correspondant respectivement aux débits de programmation du dernier élément et de l'avant-dernier élément : ACR(N-1) = MAX (ACR(N), ACR(N-1)). Puis on supprime le dernier élément $\{ACR(N), t_{pI}(N)\}$.

Dans tous les cas, on rajoute ensuite dans la liste *I* l'élément $\{ACR(t_p(k)), t_p(k)\}$ avec $ACR(t_p(k)) = ER(k)$ correspondant au débit demandé ER(k) pour le temps de programmation $t_p(k)$ déterminé.

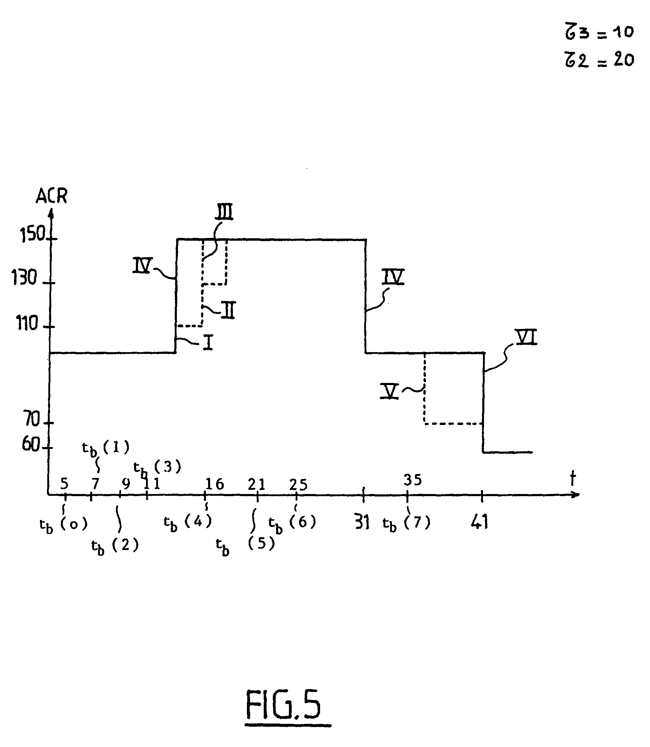

Pour illustrer ce mode de réalisation, on a construit le graphe de la Fig. 5 pour l'arrivée de 8 cellules au temps $t_b$ = 5, 7, 9, 11, 16, 21, 25 et 35. Ces cellules portent respectivement les débits ER = 110, 130, 150, 100, 70, 50 et 60. Le délai le plus court $\tau_3$ est égal à 10 alors que le délai le plus long $\tau_2$ est égal à 20. Le nombre d'événements supporté dans la liste *I* est N = 2.

La première cellule arrive donc au temps $t_b(0)$ = 5 et porte le débit ER(0) = 110. Le temps de programmation le plus proche est égal à 15 pour lequel le débit programmé est 100. On comprendra que le débit programmé est en réalité le résultat de la fonction ACR(*I*, $t_b(k) + \tau_3$) telle qu'elle est décrite ci-dessus. Comme précédemment, le premier élément dans la liste sera donc le suivant : {110, 15} correspondant au débit porté ER(0) et au temps de programmation le plus proche $t_b(0) + \tau_3$. On a marqué I l'échelon résultant correspondant.

Le processus sera semblable pour la seconde cellule 1 arrivée au temps $t_b(1)$ et aboutit à l'enregistrement dans la liste *I* du second élément {130, 17}. On a marqué II l'échelon correspondant.

La liste *I* se présente alors sous la forme suivante :

| 110 | 15 |
|-----|----|
| 130 | 17 |

La troisième cellule arrive au temps $t_b(2)$ = 9 et le débit porté est ER(2) = 150. Ce débit est supérieur à celui qui est prévu au temps de programmation le plus proche, à savoir $t_b(2) + \tau_3$ = 19 qui est 130. Cependant la liste *I* est pleine (le nombre d'éléments dans la liste *I* est égal à N = 2). Le dernier élément enregistré dans la liste a pour temps de programmation $t_{pI}(N)$ le temps 17 qui est inférieur au temps de programmation le plus proche. Il est résulte que le temps de programmation devient égal à ce temps de programmation $t_p(k) = t_{pI}(N)$. On supprime le dernier élément de la liste, à savoir l'élément {130, 17}. Puis on rajoute dans la liste l'élément $\{ER(k), t_p(k)\}$ soit l'élément {150, 17}. On a marqué III l'échelon correspondant.

La liste *I* se présente alors sous la forme suivante :

| 110 | 15 |
|-----|----|
| 150 | 17 |

La quatrième cellule arrive au temps $t_b(3)$ = 11. Le débit porté est ER(3) = 100 qui est inférieur au débit programmé au temps de programmation le plus proche qui est maintenant 150. On peut constater que le temps de programmation est maintenant égal à $t_p(3) = t_b(3) + \tau_2$, soit le temps $t_p(3)$ = 31. Cependant la liste est pleine. Le temps de programmation n'est pas modifié puisque le débit demandé ER(3) = 100 est inférieur au débit du dernier élément enregistré dans la liste *I*, soit 150.

Le débit de l'avant-dernier élément ACR(N-1) est égalé au débit du dernier élément ACR(N) = 150. On a donc maintenant l'événement {150, 15}. Le dernier élément $\{AC(N), t_{pI}(N)\}$ = {150, 17} est alors supprimé de la liste *I*.

La liste *I* se présente alors sous la forme suivante :

| 150 | 15 |
|-----|----|
|     |    |

Enfin, l'élément $\{ACR(k), t_p(k)\}$ est ajouté à la liste *I* qui est maintenant la suivante :

| 150 | 15 |
|-----|----|
| 100 | 31 |

On a marqué IV l'échelon correspondant à cette suite d'opérations.

Au temps t = 15, le débit contrôlé passe de 100 à 150 et l'événement correspondant {150, 15} est supprimé de la liste *I* qui ne comporte plus que l'élément {100, 31}. Elle se présente donc sous la forme :

| 100 | 31 |
|-----|----|
|     |    |

La cinquième cellule arrive au temps $t_b(4) = 16$ avec un débit porté qui est égal à ER(4) = 70 inférieur au débit programmé au temps de programmation le plus proche. On peut alors constater que le temps de programmation est maintenant égal à $t_p(4) = t_b(4) + \tau_2$, soit le temps $t_p(4) = 36$.

L'élément {ER(k), $t_p(k)$} est ajouté à la liste *l* qui est maintenant la suivante :

| 100 | 31 |
|-----|----|
| 70 | 36 |

On a marqué V l'échelon correspondant.

La sixième cellule arrive au temps $t_b(5) = 21$. Le débit porté est ER(5) = 50 qui est inférieur au débit programmé au temps de programmation le plus proche. On peut constater que le temps de programmation est maintenant égal à $t_p(5) = t_b(5) + \tau_2$, soit le temps $t_p(5) = 41$. Cependant la liste est pleine. Le temps de programmation n'est pas modifié puisque le débit demandé ER(k) est inférieur au débit du dernier élément enregistré dans la liste *l*.

Le débit de l'avant-dernier élément ACR(N-1) n'est pas modifié et le dernier élément {ACR(N), $t_{pl}(N)$} = {70, 36} est supprimé.

Enfin, l'élément {ER(k), $t_p(k)$} est ajouté à la liste *l* qui est maintenant la suivante :

| 100 | 31 |
|-----|----|
| 50 | 41 |

On a marqué VI l'échelon correspondant.

L'algorithme selon ce second mode de mise en oeuvre peut s'écrire sous la forme dite de pseudo-code de la manière suivante :

A) Pour chaque instant $t_b(k)$ correspondant à l'arrivée d'une cellule portant le débit demandé ER(k) :

1) si ER (k) $\geq$ ACR(*l*, $t_p^-(k)$) alors
supprimer dans la liste ordonnée *l* tous les éléments de programmation {ACR(i), $t_{pl}(i)$)} tels que $t_{pl}(i) \geq t_p^-(k)$,
si la liste est pleine (N éléments dans la liste) alors
si ($t_{pl}(N) \leq t_p^-(k)$ alors $t_p(k) = t_{pl}(N)$
supprimer le dernier élément (ACR (N), $t_{pl}(N)$)
sinon $t_p(k) = t_p^-(k)$

2) si ER(k) < ACR(*l*, $t_p^-(k)$) alors
rechercher dans la liste *l* l'élément {ACR', $t_p'$} de plus petit $t'_p$ tel que
ACR' $\leq$ ACR(k) et $t'_p > t_p^-(k)$
si l'élément{ACR',$t_p'$} existe alors
supprimer dans la liste ordonnée *l* tous les éléments de
programmation {ACR(i),$t_{pl}(i)$} tels que $t_{pl}$ (i) $\geq t'_p$ et faire $t_p(k) = t'_p$,
si l'élément (ER',$t_p'$) n'existe pas alors $t_p$ (k) = $t_p^+(k)$.
Si la liste est pleine (N éléments dans la liste) alors
si ER (k) $\geq$ ACR(N) alors $t_p(k) = t_{pl}$ (N)
ACR(N-1) = Max(ACR(N-1), ACR (N))
supprimer le dernier élément {ACR (N), $t_{pl}(N)$}

3) rajouter dans la liste après la dernière programmation l'élément {ACR(t), t)} avec ACR(t) = ER(k) et t = $t_p(k)$.

B) à l'expiration de la première date de programmation (t = $t_p(1)$):

$$ACR(t) = ACR(1);$$

supprimer le premier élément {ACR(1), $t_p(1)$} de la liste l.

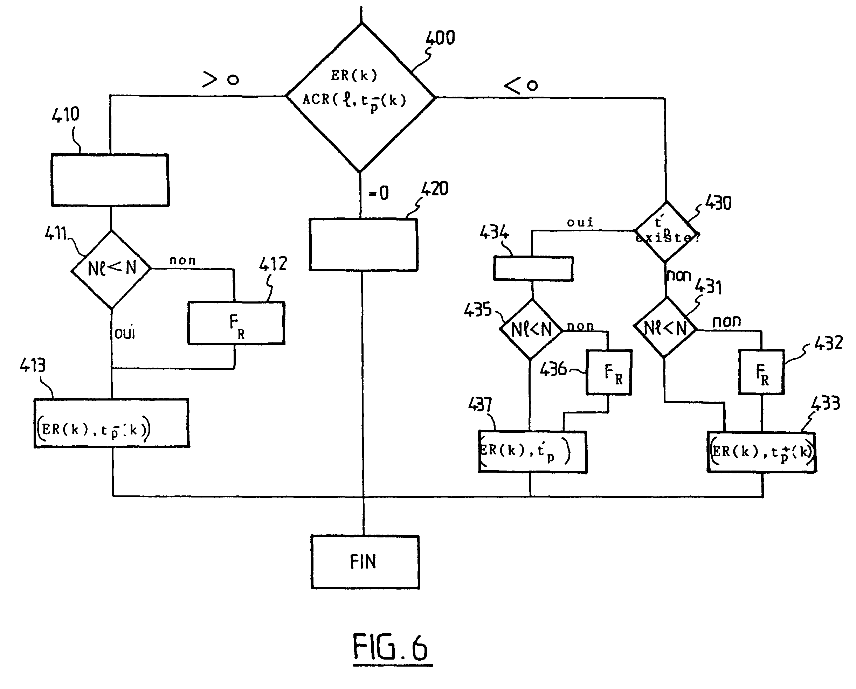

On propose ci-après un autre mode de mise en oeuvre selon l'invention qui est décrit en relation avec la Fig. 6.

Comme dans les modes de réalisation précédemment décrits, on compare, à l'étape 400, le débit demandé ER(k) avec le débit programmé au temps de programmation le plus proche. On rappelle que la valeur de ce débit est déterminée par la fonction ACR(*l*, t) décrite ci-dessus.

Si le débit demandé ER(k) est supérieur au débit programmé au temps de programmation le plus proche ACR($t_b(k) + \tau_3$), alors, comme précédemment on supprime, à l'étape 410, de la liste *l*, tous les événements de programmation prévus à un temps supérieur ou égal au temps de programmation le plus proche ($t_b(k) + \tau_3$).

Si la liste est pleine (le nombre d'événements stockés dans la liste *l* est égal à N) (étape 411), on met en oeuvre, à l'étape 412, une fonction $F_R$ dont l'objet est de réduire le nombre d'éléments dans la liste *l*. Un exemple de mise en oeuvre de cette fonction est donné ci-dessous. Par contre, si la liste n'est pas pleine, on passe directement à l'étape suivante. Celle-ci, étape 413, consiste à programmer l'événement {ACR($t_p(k)$), $t_p(k)$} avec ACR($t_p(k)$) = ER(k) et $t_p(k) = t_p^-(k)$.

Si le débit demandé ER(k) est égal au débit programmé au temps de programmation le plus proche ACR(*l*, $t_p^-(k)$), alors on supprime, à l'étape 420, dans la liste *l*, tous les éléments de programmation prévus au delà de ce temps de programmation le plus proche $t_p^-(k) = (t_b(k) + \tau_3)$.

Si le débit demandé ER(k) est inférieur au débit programmé ACR($l$, $t_p^-$(k)), on recherche dans la liste $l$, à l'étape 430, s'il existe, l'événement {ACR(t'$_p$(k), t'$_p$(k)} programmé à un temps t'$_p$(k) au delà du temps de programmation le plus proche tel que le débit ACR(t'$_p$(k)) est inférieur au débit demandé ER(k). Si plusieurs événements {ACR(t'$_p$(k), t'$_p$(k)} existent, on ne recherchera que le premier de ces événements pour lequel le temps t'$_p$(k) est le plus petit.

Si cet événement n'existe pas et que la liste $l$ est pleine (étape 431), on met en oeuvre, à l'étape 432, la fonction de réduction $F_R$ mentionnée ci-dessus. Puis à l'étape 433, on rajoute, dans la liste $l$, l'élément de programmation {ACR(t$_p$(k)), t$_p$(k)} dont le débit ACR(t$_p$(k)) correspond au débit demandé ER(k) et dont le temps de programmation est le temps de programmation le plus éloigné t$_p$(k) = t$_b$(k) + $\tau_2$.

Si l'événement recherché à l'étape 430 n'existe pas et qu'en plus la liste $l$ n'est pas pleine (étape 431), on ajoute directement l'élément de programmation {ACR(t$_p$(k)), t$_p$(k)} dont le débit ACR(t$_p$(k)) correspond au débit demandé ER(k) et dont le temps de programmation est le temps de programmation le plus éloigné t$_p^+$(k) = t$_b$(k) + $\tau_2$ (étape 433).

Par contre, si l'élément recherché (ACR', t$_p$') existe, on supprime, à l'étape 434, toute programmation prévue à un temps supérieur ou égal au temps de programmation t$_p$'.

Si la liste $l$ est pleine (N éléments de programmation se trouvent dans la liste $l$) (étape 435), on met en oeuvre, à l'étape 436, la fonction de réduction $F_R$ mentionnée ci-dessus, puis on ajoute, à l'étape 437, à la liste $l$, l'élément {ACR{t$_p$(k)), t$_p$(k)} dont le débit ACR(t$_p$(k)) correspond au débit demandé ER(k) et dont le temps de programmation t$_p$(k) devient égal au temps de programmation t$_p$' de l'élément de programmation recherché.

Par contre, si la liste $l$ n'est pas pleine, on ajoute directement, également à l'étape 437, l'élément {ACR(t$_p$(k)), t$_p$(k)} dont le débit ACR(t$_p$(k)) correspond au débit demandé ER(k) et dont le temps de programmation t$_p$(k) devient égal au temps de programmation t$_P$' de l'élément de programmation recherché.

La fonction $F_R$ va d'abord déterminer deux événements de programmation consécutifs de la liste $l$ et va donner finalement un seul événement qui sera tel qu'il en résultera une surévaluation du débit à contrôler. Le choix des deux événements considérés est avantageusement fait de manière à limiter la surévaluation de débit de contrôle qui résulte de l'application de la fonction $F_R$.

Selon un mode avantageux de réalisation de la fonction de réduction $F_R$, celle-ci consiste à rechercher d'abord dans la liste $l$, qui est ordonnée selon l'ordre croissant des temps de programmation t$_{pl}$, les deux éléments successifs pour lesquels le produit de l'augmentation ou de la diminution de débit par la mesure de l'intervalle de temps compris entre leurs deux temps de programmation soit minimum. Ainsi, sont recherchés les deux éléments {ACR(X),t$_{pl}$(X)} et {ACR(X-1),t$_{pl}$(X-1)} tels que la valeur de l'expression |(ACR(X)-ACR(X-1)|.(t$_{pl}$(X)-t$_{pl}$(X-1) soit minimale, X étant l'ordre dans la liste $l$ du deuxième de ces deux éléments successifs.

Si le débit de programmation ACR(X) du second élément est supérieur au débit de programmation ACR(X-1) du premier élément, on élimine le second élément et on affecte au premier le débit du second. Ainsi, des deux éléments{ACR(X),t$_{pl}$(X)} et {ACR(X-1),t$_{pl}$(X-1)}, il ne restera qu'un élément {ACR(X), t$_{pl}$(X-1)} dont le débit correspond au débit de programmation du second élément et dont le temps de programmation est celui de premier.

Par contre, si le débit de programmation ACR(X) du second élément n'est pas supérieur au débit de programmation ACR(X-1) du premier élément, on élimine le second élément.

L'ordre des éléments d'ordre supérieur ou égal à X est modifié de manière que l'ordre de la case libre de la liste $l$ soit celle d'ordre N. Ceci se traduit par la mise en oeuvre de l'instruction suivante :

Pour i = X à N-1, ACR(i) = ACR(i+1) et t$_{pl}$(i) = t$_{pl}$(i+1).

L'ensemble de ces opérations peut s'exprimer par le pseudo-code suivant :

Si ACR(X) > ACR(X - 1) alors on programme le plus grand des deux derniers débits.

$$ACR(X-1) = ACR(X).$$

Supprimer l'élément d'ordre X.

Pour i = X jusqu'à N-1 alors on décale les programmations d'une case mémoire.

$$ACR(i) = ACR(i + 1) \text{ et } t_{pl}(i) = t_{pl}(i + 1)$$

Fin du pour.

Insérer à l'ordre N le nouvel événement {ACR(N), t$_p$(N)} = {ER(k), t$_p$(k)}.

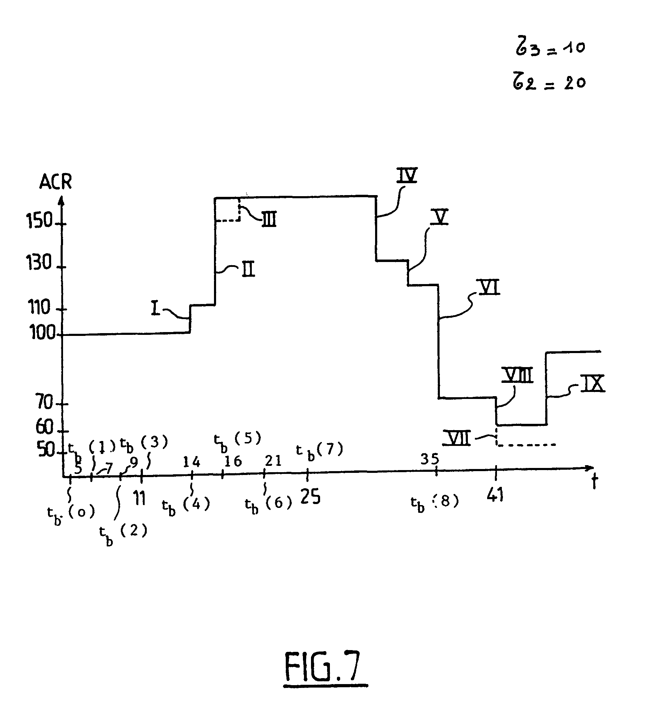

On va donner ci-dessous, en relation avec la Fig. 7, un exemple de mise en oeuvre du procédé selon ce mode de réalisation pour l'arrivée de 9 cellules aux temps t$_b$ = 5, 7, 9, 11, 14, 16, 21, 25 et 35. Ces cellules portent respectivement les débits ER = 110, 150, 160, 130, 120, 70, 50, 60 et 90. Le délai le plus court $\tau_3$ est égal à 10 alors que le délai le plus long $\tau_2$ est égal à 20. Le nombre d'éléments supporté dans la liste $l$ est N = 4.

La première cellule arrive donc au temps t$_b$(0) = 5 et porte le débit ER(0) = 110. Le temps de programmation le plus proche est égal à 15 pour lequel le débit programmé est 100. Comme précédemment, le second élément dans la liste sera donc le suivant : {110, 15} correspondant au débit porté ER(0) et au temps de programmation le plus proche t$_b$(0) + $\tau_3$. On a marqué I l'échelon de débit correspondant.

Le processus sera semblable pour les seconde et troisième cellules et aboutit à l'enregistrement dans la liste *I* du second élément {150, 17} et du troisième élément {160, 19}. On a marqué II et III les échelons respectifs correspondants.

La quatrième cellule arrive au temps $t_b(3) = 11$ et le débit porté est ER(3) = 130. Ce débit est inférieur à celui qui est prévu au temps de programmation le plus proche, à savoir $t_b(3) + \tau_3 = 21$ qui est 160. L'étape de recherche n'aboutit pas. La liste *I* n'est pas pleine et l'élément {130,31} dont le débit est égal au débit demandé ER(3) et dont le temps de programmation est le temps de programmation le plus éloigné $t_p(3) = t_b(3) + \tau_2$ est ajouté à la liste *I*.

La liste *I* se présente donc sous la forme suivante :

| | |
|-----|----|
| 110 | 15 |
| 150 | 17 |
| 160 | 19 |
| 130 | 31 |

On a marqué IV l'échelon correspondant à cette dernière opération.

La cinquième cellule arrive au temps $t_b(4) = 14$ et le débit porté est ER(4) = 120 qui est inférieur au débit programmé au temps de programmation le plus proche. La recherche n'aboutit pas. Cependant la liste *I* est pleine. On met donc en oeuvre la fonction de réduction qui, comme on peut aisément le vérifier conduit à la suppression de l'élément de programmation {150, 17} et à l'ajout de l'événement {160, 17}. En effet, le produit | (ACR(X)-ACR(X-1)|.(t_{pl}(X)-t_{pl}(X-1) = |160-150|.(19-17) est minimum. Puis, on ajoute, dans la liste *I*, l'élément dont le débit est égal au débit demandé ER(4) et donc le temps de programmation est le temps de programmation le plus éloigné $t_p(4) = t_b(4) + \tau_2$ est ajouté à la liste *I*.

La liste *I* devient donc la suivante :

| | |
|-----|----|
| 110 | 15 |
| 160 | 17 |
| 130 | 31 |
| 120 | 34 |

On a marqué V l'échelon correspondant résultant de ces opérations.

Le contrôle correspondant à l'élément {110, 15} est mis en oeuvre et cet élément est supprimé de la liste.

La sixième cellule arrive au temps $t_b(5) = 16$ avec un débit demandé égal à 70. Ce débit est inférieur à toute programmation et l'élément {70, 36} est ajouté à la liste *I* qui devient :

| | |
|-----|----|
| 160 | 19 |
| 130 | 31 |
| 120 | 34 |
| 70  | 36 |

On a marqué VI l'échelon correspondant résultant de ces opérations.

Le contrôle correspondant à l'élément {160, 19} est mis en oeuvre et cet élément est supprimé de la liste.

Au temps $t_b(6)$ égal à 21 arrive la septième cellule. Elle porte le débit demandé ER(6) = 50 qui est inférieur à toute programmation. Il en résulte que l'élément {50,41} est ajouté à la liste qui devient :

| | |
|-----|----|
| 130 | 31 |
| 120 | 34 |
| 70  | 36 |
| 50  | 41 |

On a marqué VII l'échelon correspondant résultant de ces opérations.

Au temps $t_b(7)$ égal à 25 arrive la huitième cellule laquelle porte le débit demandé 60. La recherche aboutit à l'élément {50, 41} qui est supprimé de la liste *I*. La liste n'est pas pleine et l'élément {60,41} est ajouté à la liste *I* qui devient :

| | |
|-----|----|
| 130 | 31 |
| 120 | 34 |
| 70  | 36 |
| 60  | 41 |

On a marqué VIII l'échelon correspondant résultant de ces opérations.

Les contrôles correspondant aux éléments {130,31} et {120,34} sont mis en oeuvre et ces éléments sont supprimés de la liste *I*.

Au temps $t_b(8)$ égal à 35 arrive la neuvième cellule laquelle porte le débit demandé 90 supérieur au débit programmé pour le temps de programmation le plus proche. La liste *I* n'est pas pleine et l'élément de programmation {90,45} est ainsi ajouté à la liste qui devient :

| | |
|-----|----|
| 70  | 36 |
| 60  | 41 |
| 90  | 45 |
|     |    |

On a marqué IX l'échelon correspondant résultant de ces opérations.

Dans la présente description, on a essentiellement décrit des procédés. Cependant, on comprendra que la présente invention concerne également des unités d'interface utilisateur-réseau qui comportent des moyens pour mettre en oeuvre les étapes des procédés décrits.

**Revendications**

1. Procédé de contrôle de la conformité du débit des cellules de données émises par un terminal source en communication avec un terminal destinataire, via un réseau à haut débit, par exemple un réseau utilisant le mode de transfert dit ATM, ledit réseau comportant des unités d'interface utilisateur-réseau auxquels sont connectés lesdits terminaux, et, éventuellement, des unités d'interface réseau-réseau, ledit terminal source émettant périodiquement une cellule dite de gestion de ressources qui est retournée par le terminal destinataire audit terminal source sous la forme d'une cellule dite de gestion de ressources retour, ladite cellule de gestion de ressources comprenant un champ dans lequel est stockée la valeur d'un débit demandé, ledit procédé comprenant un processus de contrôle (21b) consistant à vérifier la conformité du débit des cellules émises par ledit terminal source avec un débit programmé par un processus dit processus de programmation, **caractérisé en ce que** ledit processus de programmation consiste, à l'arrivée d'une cellule de gestion de ressources retour (BW-RM) d'ordre k à ladite unité d'interface (21), à déterminer la date, dite date de programmation ($t_p(k)$), de la prise en compte par ledit processus de contrôle (21b) de la demande de débit (ER(k)) contenue dans le champ de ladite cellule (BW-RM), ladite date de programmation étant égale à ladite date d'arrivée ($t_b(k)$) retardée du délai minimum aller-retour ($\tau_3$) entre l'interface et le terminal, dite date de programmation la plus proche, lorsque ladite prise en compte à cette date de programmation la plus proche aboutit à une augmentation de débit programmé et étant supérieur au temps de programmation le plus proche et inférieur à ladite date d'arrivée ($t_b(k)$) retardée d'un délai maximum aller-retour ($\tau_2$), ($t_b(k) + \tau_2$) étant dite date de programmation la plus éloignée, si sa prise en compte audit temps de programmation le plus proche ($t_b(k) + \tau_3$) avait abouti à une diminution de débit et, à transmettre, à l'échéance du temps de programmation ($t_p(k)$), ladite valeur de débit à contrôler (ACR(tp(k))) audit processus de contrôle (21b) pour contrôle du flux émis par ledit terminal source.

2. Procédé selon la revendication 1, **caractérisé en ce qu'**il consiste à tenir une liste (l) d'événements de programmation, chaque événement étant défini par un couple de valeurs dont la première représente une valeur de débit ACR($t_p(k)$) et dont la seconde représente la date de programmation $t_p(k)$ de ladite valeur de débit ACR($t_p(k)$), et ladite liste étant ordonnée suivant ladite date de programmation des événements.

3. Procédé selon la revendication 2, **caractérisé en ce qu'**il consiste pour connaître le débit programmé (ACR($t_p^-(k)$)) à la date d'arrivée $t_b(k)$ retardée de la durée minimale d'aller retour $\tau_3$ ($t_p^-(k) = t_b(k) + \tau_3$), à définir une fonction ACR(l,t) qui, à partir des événements présents dans la liste l, détermine la valeur du débit programmé à un temps quelconque t de la manière suivante :

   si, dans ladite liste l, il existe au moins un événement de programmation (ACR($t_p$), $t_p$) prévu à un temps de programmation $t_p$ compris entre le temps présent $t_0$ et le temps t, ladite valeur est égale au débit de programmation de cet événement ACR($t_p$) et, s'il y en a plusieurs, elle est égale au débit de programmation du dernier de ces événements, et
   si, toujours dans cette liste, il n'existe pas d'événements programmés entre le temps présent $t_0$ et t, ladite valeur est égale à la valeur du débit actuellement contrôlé dans le processus de contrôle.

4. Procédé selon la revendication 2 ou 3, **caractérisé en ce qu'**il consiste à :

   à l'arrivée à l'unité d'interface (21) auquel est connecté ledit terminal source, d'une cellule de gestion de ressources retour (BW-RM) de numéro de référence (k), à comparer le débit (ER(k)) que porte ladite cellule avec le débit programmé (ACR($l,t_p^-(k)$)) à l'instant de programmation le plus proche, puis
   si ladite comparaison effectuée à chaque arrivée d'une cellule de gestion de ressources (BW-RM) montre que le débit demandé ER(k) est supérieur au débit programmé au temps de programmation le plus proche (ACR($l,t_p^-(k)$)), supprimer, de ladite liste l, tout événement de programmation de débit prévu à un temps supérieur ou égal au temps de programmation le plus proche ($t_p^-(k)$) et rajouter, dans ladite liste l, un événement dont le débit contrôlé est égal à la valeur du débit ER(k) porté par ladite cellule et dont le temps de programmation est le temps de programmation le plus proche ($t_p^-(k) = t_b(k) + \tau_3$),
   si ladite comparaison montre que le débit demandé ER(k) est égal au débit programmé

ACR($l$,$t_p^-$(k)) au temps programmation le plus proche, supprimer, de la liste $l$, tout événement de programmation de débit dont le temps de programmation est supérieur au temps de programmation le plus proche ($t_p^-$(k) = $t_b$(k) + $\tau_3$), si ladite comparaison montre que le débit demandé ER(k) est inférieur au débit programmé ACR($l$,$t_p^-$(k)), rechercher, dans ladite liste $l$, s'il existe un événement dont le temps de programmation ($t'_p$) est le plus petit temps de programmation dans la liste supérieur au temps le plus proche et dont le débit est inférieur ou égal au débit demandé ER(k),

si cette recherche montre que cet événement n'existe pas, rajouter, dans la liste $l$, un événement dont le débit est égal à la valeur du débit demandé ER(k) et dont le temps de programmation est le temps de programmation le plus éloigné ($t_p^+$(k) = $t_b$(k) + $\tau$2) et,

si cette recherche montre que cet événement existe, supprimer, de la liste $l$, tout événement de programmation dont le temps de programmation est supérieur ou égal au temps de programmation ($t'_p$) dudit événement ainsi trouvé et rajouter, dans la liste $l$, un événement dont le débit est égal à la valeur du débit demandé ER(k) et dont le temps de programmation est égal au temps de programmation dudit événement trouvé ($t'_p$),

et, à changer le débit de contrôle du processus de contrôle (21b) avec le débit du premier événement {ACR(1), $t_p$(1)} programmé dans la liste d'événements de programmation lorsque le temps de programmation $t_p$(1) dudit premier événement arrive à échéance.

5. Procédé selon une des revendications 2 à 4, **caractérisé en ce qu'**il consiste à limiter le nombre d'événements stockés dans ladite liste $l$ à un nombre fini N d'événements égal ou supérieur à deux, et, avant de rajouter un nouvel événement dans ladite liste, à vérifier si le nombre d'événements contenus dans ladite liste n'est pas supérieur audit nombre fini et, dans ce cas, à mettre alors en oeuvre une fonction de réduction du nombre d'événements contenus dans la liste.

6. Procédé selon la revendication 4 ou 5, **caractérisé en ce que** ladite fonction de réduction consiste, lorsque le débit demandé (ER(k)) que porte la cellule de gestion de ressources retour (BW-RM) d'ordre k arrivée à l'instant (tb(k)) est égal au débit programmé (ACR($l$,$t_p^-$(k))) à l'instant de programmation le plus proche ($t_p^-$(k)=$t_b$(k)+$\tau_3$), à supprimer, de la liste l, tout événement de programmation de débit dont le temps de programmation est supérieur ou égal au temps de programmation le plus proche ($t_p^-$(k)=$t_b$(k)+$\tau_3$) et à rajouter dans la liste 1 un événement dont le débit est égal à la valeur du débit (ER(k)) porté par ladite cellule de gestion de ressources retour (BW-RM) et dont le temps de programmation est le temps de programmation le plus proche ($t_p^-$(k)-$t_b$(k)+$\tau_3$).

7. Procédé selon l'une des revendications 4 à 6, **caractérisé en ce qu'**il consiste, lors du rajout dans la liste d'un événement pour un temps correspondant au temps le plus proche ($t_p^-$(k)=$t_b$(k)+$\tau_3$), à vérifier, avant de rajouter ledit événement, si le nombre d'événements dans la liste 1 est égal audit nombre fini N et si le temps de programmation du dernier événement dans la liste l ($t_p$(N)) est inférieur ou égal au temps de programmation le plus proche ($t_p^-$(k)=$t_b$(k)+$\tau_3$), à définir le temps de programmation de l'événement à rajouter ($t_p$(k)) comme étant égal audit temps de programmation du dernier événement de la liste, à supprimer le dernier événement de la liste, et à rajouter ledit événement à rajouter à la place du dernier événement dans la liste l, sinon, si le nombre d'événements dans la liste est inférieur audit nombre fini N, à définir le temps de programmation de l'événement à rajouter comme étant égal au temps de programmation le plus proche ($t_p^-$(k)=$t_b$(k)+$\tau_3$), et à rajouter ledit événement dans la liste.

8. Procédé selon une des revendications 4 à 7, **caractérisé en ce qu'**il consiste, lors d'un rajout d'un événement dans la liste pour un temps correspondant au temps le plus éloigné, à vérifier, avant de rajouter ledit événement, si le nombre d'événements dans la liste l est égal audit nombre fini N, et, si c'est le cas, à remplacer le temps de programmation ($t_p$(k)) de l'événement à rajouter par le temps de programmation du dernier événement de la liste ($t_{pl}$(N) si le débit dudit événement à rajouter (ER(k)) est supérieur ou égal au dernier débit programmé dans la liste ER(N), puis à programmer à la place de l'avant-dernier événement de la liste (d'ordre N-1), un événement dont le temps de programmation est celui de l'avant-dernier événement de la liste 1 (ACR(N-1),($t_{pl}$(N-1)), et le débit est le plus grand débit entre les débits des deux derniers événements de la liste 1 (ACR(N - 1) = Max(ACR(N - 1), ACR(N))), puis à rajouter l'événement à rajouter à la place du dernier événement dans la liste l.

9. Procédé selon la revendication 5 à 8 , **caractérisé en ce qu'**il consiste, lors du rajout d'un événement dans la liste $l$, à vérifier si le nombre d'événements contenus dans la liste $l$ ne dépasse pas ledit nombre fini, et si tel est le cas, à rechercher dans la liste $l$ deux événements successifs pour lesquels le produit de l'augmentation ou de la diminution de débit par la mesure de l'intervalle de temps compris entre leurs deux temps de programmation soit minimum puis à leur substituer un événement dont le débit est le plus grand des deux débits et le temps de programmation est le premier des deux temps de programmation.

**10.** Unité d'interface utilisateur-réseau à laquelle peuvent être connectés, d'une part, un terminal source et, d'autre part, un réseau à haut débit, par exemple un réseau utilisant le mode de transfert dit ATM, un terminal source connecté à ladite unité émettant périodiquement une cellule dite de gestion de ressources qui est retournée sous la forme d'une cellule dite de gestion de ressources retour par un terminal destinataire avec lequel le terminal source est en communication, ladite cellule de gestion de ressources comprenant un champ dans lequel est stockée la valeur d'un débit demandé, ladite unité d'interface comprenant des moyens pour mettre en oeuvre un processus de contrôle (21b) consistant à vérifier la conformité du débit des cellules émises par ledit terminal source avec un débit programmé par des moyens mettant en oeuvre un processus de programmation, **caractérisée en ce que** lesdits moyens pour mettre en oeuvre ledit processus de programmation sont prévus pour, d'une part, déterminer, à l'arrivée d'une cellule de gestion de ressources retour (BW-RM) d'ordre k à ladite unité d'interface (21), la date, dite date de programmation ($t_p$(k)), de la prise en compte par ledit processus de contrôle (21b) de la demande de débit (ER(k)) contenue dans le champ de ladite cellule (BW-RM), ladite date de programmation étant égale à ladite date d'arrivée ($t_b$(k)) retardée du délai minimum aller-retour ($\tau_3$) entre ladite interface et ledit terminal, dite date de programmation la plus proche, lorsque ladite prise en compte à cette date de programmation la plus proche aboutit à une augmentation de débit programmé et étant supérieur au temps de programmation le plus proche et inférieur à ladite date d'arrivée ($t_b$(k)) retardée d'un délai maximum aller-retour ($\tau_2$), ($t_b$(k) + $\tau_2$) étant dite date de programmation la plus éloignée, si sa prise en compte audit temps de programmation le plus proche ($t_b$(k) + $\tau_3$) avait abouti à une diminution de débit et pour, d'autre part, transmettre, à l'échéance du temps de programmation ($t_p$(k)), ladite valeur de débit à contrôler (ACR(tp(k))) auxdits moyens pour mettre en oeuvre ledit processus de contrôle (21b) pour contrôle du flux émis par ledit terminal source.

**11.** Unité d'interface utilisateur-réseau selon la revendication 10, **caractérisée en ce qu'**elle comprend des moyens pour tenir une liste (l) d'événements de programmation, chaque événement étant défini par un couple de valeurs dont la première représente une valeur de débit ACR($t_p$(k)) et dont la seconde représente la date de programmation $t_p$(k) de ladite valeur de débit ACR($t_p$(k)), et ladite liste étant ordonnée suivant ladite date de programmation des événements.

**12.** Unité d'interface utilisateur-réseau selon la revendication 11, **caractérisée en ce qu'**elle comprend des moyens pour connaître le débit programmé (ACR($t_p^-$(k))) à la date d'arrivée $t_b$(k) retardée de la durée minimale d'aller retour $\tau_3$ ($t_p^-$(k) = $t_b$(k) + $\tau_3$) et qui définissent une fonction ACR($l$,t) permettant de déterminer, à partir des événements présents dans la liste $l$, la valeur du débit programmé à un temps quelconque tde et ce, de la manière suivante :

si, dans ladite liste $l$, il existe au moins un événement de programmation {ACR($t_p$), $t_p$} prévu à un temps de programmation $t_p$ compris entre le temps présent $t_0$ et le temps t, ladite valeur est égale au débit de programmation de cet événement ACR($t_p$) et, s'il y en a plusieurs, elle est égale au débit de programmation du dernier de ces événements, et
si, toujours dans cette liste, il n'existe pas d'événements programmés entre le temps présent $t_0$et t, ladite valeur est égale à la valeur du débit actuellement contrôlé dans le processus de contrôle.

**13.** Unité d'interface utilisateur-réseau selon la revendication 11 ou 12, **caractérisée en ce qu'**elle comporte des moyens qui :

à l'arrivée à l'unité d'interface (21) auquel est connecté ledit terminal source, d'une cellule de gestion de ressources retour (BW-RM) de numéro de référence (k), comparent le débit (ER(k)) que porte ladite cellule avec le débit programmé (ACR($l$,$t_p^-$(k))) à l'instant de programmation le plus proche,
qui si ladite comparaison effectuée à chaque arrivée d'une cellule de gestion de ressources (BW-RM) montre que le débit demandé ER(k) est supérieur au débit programmé au temps de programmation le plus proche (ACR($l$,$t_p^-$(k))), suppriment, de ladite liste $l$, tout événement de programmation de débit prévu à un temps supérieur ou égal au temps de programmation le plus proche ($t_p^-$(k)) et rajoutent, dans ladite liste $l$, un événement dont le débit contrôlé est égal à la valeur du débit ER(k) porté par ladite cellule et dont le temps de programmation est le temps de programmation le plus proche ($t_p^-$(k) = $t_b$(k) + $\tau_3$),
qui, si ladite comparaison montre que le débit demandé ER(k) est égal au débit programmé ACR($l$,$t_p^-$(k)) au temps programmation le plus proche, suppriment, de la liste $l$, tout événement de programmation de débit dont le temps de programmation est supérieur au temps de programmation le plus proche ($t_p^-(k) = t_b(k) + \tau_3$),

qui, si ladite comparaison montre que le débit demandé ER(k) est inférieur au débit programmé ACR($l$,$t_p^-$(k)), recherchent, dans ladite liste $l$, s'il existe un événement dont le temps de programmation ($t'_p$) est le plus petit temps de programmation dans la liste supérieur au temps le plus proche et dont le débit est inférieur ou égal au débit demandé ER(k), et, si cette recherche montre que cet événement n'existe pas, rajoutent, dans la liste $l$, un événement dont le débit est égal à la valeur du débit demandé ER(k) et dont le temps de programmation est le temps de programmation le plus éloigné ($t_p^+(k) = t_b(k) + \tau2$) alors que si cette recherche montre que cet événement existe, ils suppriment, de la liste $l$, tout événement de programmation dont le temps de programmation est supérieur ou égal au temps de programmation ($t'_p$) dudit événement ainsi trouvé et ils rajoutent, dans la liste $l$, un événement dont le débit est égal à la valeur du débit demandé ER(k) et dont le temps de programmation est égal au temps de programmation dudit événement trouvé ($t'_p$),

et qui changent le débit de contrôle du processus de contrôle (21b) avec le débit du premier événement {ACR(1), $t_p$(1)} programmé dans la liste d'événements de programmation lorsque le temps de programmation $t_p$(1) dudit premier événement arrive à échéance.

14. Unité d'interface utilisateur-réseau selon une des revendications 11 à 13, **caractérisée en ce qu'**elle comprend des moyens pour limiter le nombre d'événements stockés dans ladite liste $l$ à un nombre fini N d'événements égal ou supérieur à deux, et qui, avant de rajouter un nouvel événement dans ladite liste, vérifient si le nombre d'événements contenus dans ladite liste n'est pas supérieur audit nombre fini et, dans ce cas, mettent en oeuvre une fonction de réduction du nombre d'événements contenus dans la liste.

15. Unité d'interface utilisateur-réseau selon la revendication 13 ou 14, **caractérisée en ce que** ladite fonction de réduction consiste, lorsque le débit demandé (ER(k)) que porte la cellule de gestion de ressources retour (BW-RM) d'ordre k arrivée à l'instant (tb(k)) est égal au débit programmé (ACR($l$,$t_p^-$(k))) à l'instant de programmation le plus proche ($t_p^-$(k)=$t_b$(k)+$\tau_3$), à supprimer, de la liste 1, tout événement de programmation de débit dont le temps de programmation est supérieur ou égal au temps de programmation le plus proche ($t_p^-$(k)=$t_b$(k)+$\tau_3$) et à rajouter dans la liste l un événement dont le débit est égal à la valeur du débit (ER(k)) porté par ladite cellule de gestion de ressources retour (BW-RM) et dont le temps de programmation est le temps de programmation le plus proche ($t_p^-$(k)=$t_b$(k)+$\tau_3$).

16. Unité d'interface utilisateur-réseau selon l'une des revendications 13 à 15, **caractérisée en ce qu'**elle comporte des moyens pour vérifier, lors du rajout dans la liste d'un événement pour un temps correspondant au temps le plus proche ($t_p^-$(k)=$t_b$(k)+$\tau_3$), et avant de rajouter ledit événement, si le nombre d'événements dans la liste 1 est égal audit nombre fini N et si le temps de programmation du dernier événement dans la liste l ($t_p$(N)) est inférieur ou égal au temps de programmation le plus proche ($t_p^-$(k)=$t_b$(k)+$\tau_3$), et qui définissent alors le temps de programmation de l'événement à rajouter ($t_p$(k)) comme étant égal audit temps de programmation du dernier événement de la liste, suppriment le dernier événement de la liste, et rajoutent ledit événement à rajouter à la place du dernier événement dans la liste l, sinon, si le nombre d'événements dans la liste est inférieur audit nombre fini N, lesdits moyens sont prévus pour définir le temps de programmation de l'événement à rajouter comme étant égal au temps de programmation le plus proche ($t_p^-$(k)=$t_b$(k)+$\tau_3$), et ils rajoutent ledit événement dans la liste.

17. Unité d'interface utilisateur-réseau selon une des revendications 13 à 16, **caractérisée en ce qu'**elle comporte des moyens pour vérifier, lors d'un rajout d'un événement dans la liste pour un temps correspondant au temps le plus éloigné et avant de rajouter ledit événement, si le nombre d'événements dans la liste l est égal audit nombre fini N, et, si c'est le cas, pour remplacer le temps de programmation ($t_p$(k)) de l'événement à rajouter par le temps de programmation du dernier événement de la liste ($t_{pl}$(N) si le débit dudit événement à rajouter (ER(k)) est supérieur ou égal au dernier débit programmé dans la liste ER(N), pour programmer à la place de l'avant-dernier événement de la liste (d'ordre N-1), un événement dont le temps de programmation est celui de l'avant-dernier événement de la liste l (ACR(N-1),($t_{pl}$(N-1)), et le débit est le plus grand débit entre les débits des deux derniers événements de la liste 1 (ACR(N - 1) = Max(ACR(N - 1),ACR(N))), pour rajouter l'événement à rajouter à la place du dernier événement dans la liste l.

18. Unité d'interface utilisateur-réseau selon la revendication 14 à 17, **caractérisée en ce qu'**elle comporte des moyens pour vérifier, lors du rajout d'un événement dans la liste $l$, si le nombre d'événements contenus dans la liste $l$ ne dépasse pas ledit nombre fini, et si tel est le cas, pour rechercher dans la liste $l$ deux événements successifs pour lesquels le produit de l'augmentation ou de la diminution de débit par la mesure de l'intervalle de temps compris entre leurs deux temps de programmation soit minimum puis pour leur substituer un événement dont le débit est le plus grand des deux débits et le temps de programmation est le premier des deux temps de programmation.

## Claims

1. Method for controlling the bit rate conformity of data cells transmitted by a source terminal in communication with a destination terminal, via a high-speed network, for example a network using the transfer mode known as ATM, the said network comprising user-network interface units to which the said terminals are connected and possibly network-network interface units, the said source terminal periodically transmitting a cell known as a resource management cell which is returned by the destination terminal to the said source terminal in the form of a cell known as a backward-resource management cell, the said resource management cell comprising a field in which the value of a requested bit rate is stored, the said method comprising a control process (21b) consisting in verifying the conformity of the bit rate of the cells transmitted by the said source terminal with a bit rate programmed by a process known as a programming process, **characterised in that** the said programming process consists, upon the arrival of a backward-resource management cell (BW-RM) of order k at the said interface unit (21), in determining the time, known as the programming time ($t_p(k)$), in the said control process (21b) taking account of the rate request (ER(k)) included in the field of the said cell (BW-RM), the said programming time being equal to the said arrival time ($t_b(k)$) delayed by the minimum forward-backward delay ($\tau_3$) between the interface and the terminal, known as the closest programming time, when the said account taken at this closest programming time results in an increase in the programmed bit rate, being greater than the closest programming time and less than the said arrival time ($t_b(k)$) delayed by a maximum forward-backward delay ($\tau_2$), ($t_b(k)+\tau_2$) being known as the most distant programming time if taking account of it at the said closest programming time ($t_b(k)+\tau_3$) results in a reduction in bit rate and in transmitting, upon the expiry of the programmed time ($t_p(k)$), the said bit rate value to be controlled (ACR($t_p(k)$)) to the said control process (21b) for controlling the flow transmitted by the said source terminal.

2. Method according to claim 1, **characterised in that** it consists in keeping a list (*l*) of programming events, each event being defined by a pair of values, the first of which represents a bit rate value ACR($t_p(k)$) and the second of which represents the programming time $t_p(k)$ of the said bit rate value ACR($t_p(k)$), the said list being arranged in order according to the said event programming time.

3. Method according to claim 2, **characterised in that** it consists, in order to identify the programmed bit rate (ACR($t_p^-(k)$)) at the arrival time $t_b(k)$ delayed by the minimum forward-backward delay $\tau_3$ ($t_p^-(k)=t_b(k)+\tau_3$), in defining a function ACR(*l*,t) which, on the basis of the events present in list *l*, determines the value of the programmed bit rate at any time t as follows:

   if, in the said list *l*, there is at least one programming event {ACR($t_p$), $t_p$) provided at programming time $t_p$ between the present time $t_0$ and time t, the said value is equal to the programming bit rate of this event ACR($t_p$) and, if there are several of them, it is equal to the programming bit rate of the last of these events, and
   if, still in the same list, there are no programmed events between the present time to and t, the said value is equal to the value of the bit rate currently being controlled in the control process.

4. Method according to claim 2 or 3, **characterised in that** it consists in:

   upon the arrival at the interface unit (21) to which the said source terminal is connected of a backward-resource management cell (BW-RM) with reference number (k), comparing the bit rate (ER(k)) carried by the said cell with the programmed rate (ACR(*l*,$t_p^-(k)$)) at the closest programming moment in time, and then if the said comparison made upon each arrival of a resource management cell (BW-RM) shows that the requested bit rate ER(k) is greater than the bit rate programmed at the closest programming time (ACR(*l*,$t_p^-(k)$)), deleting from the said list *l* any bit rate programming event provided at a time greater than or equal to the closest programming time ($t_p^-(k)$) and adding to the said list *l* an event the controlled bit rate of which is equal to the value of the bit rate ER(k) carried by the said cell and the programming time of which is the closest programming time ($t_p^-(k)=t_b(k)+\tau_3$),
   if the said comparison shows that the requested bit rate ER(k) is equal to the programmed bit rate ACR(*l*,$t_p^-(k)$) at the closest programming time, deleting from list *l* any bit rate programming event the programming time of which is greater than the closest programming time ($t_p^-(k)=t_b(k)+\tau_3$),
   if the said comparison shows that the requested rate ER(k) is less than the programmed bit rate

ACR($l$,$t_p^-$(k)), looking in the said list $l$ to see if there is an event the programming time (t'$_p$) of which is the smallest programming time in the list greater than the closest time and the bit rate of which is less than or equal to the requested bit rate ER(K),

if this search shows that this event does not exist, adding to list $l$ an event the bit rate of which is equal to the value of the requested bit rate ER(k) and the programming time of which is the most distant programming time $(t_p^+(k)=t_b(k)+\tau_2)$ and,

if this search shows that this event exists, deleting from the list $l$ any programming event the programming time of which is greater than or equal to the programming time (t'$_p$) of the said event thus found and adding to list $l$ an event the bit rate of which is equal to the value of the requested rate ER(k) and the programming time of which is equal to the programming time of the said event found (t'$_p$),

and replacing the control rate of the control process (21b) with the bit rate of the first event {ACR(l), $t_p$(1)} programmed in the list of programming events when the programming time $t_p$(1) of the said first event comes to an end.

5. Method according to one of claims 2 to 4, **characterised in that** it consists in limiting the number of events stored in the said list $l$ to a finite number N of events equal to or greater than two, and, before adding a new event to the said list, verifying whether the number of events contained in the said list is not greater than the said finite number and, if so, then implementing a function to reduce the number of events contained in the list.

6. Method according to claim 4 or 5, **characterised in that** the said reduction function consists in deleting from list $l$ any bit rate programming event the programming time of which is greater than or equal to the closest programming time $(t_p^-(k)=t_b(k)+\tau_3)$ and adding to list $l$ an event the bit rate of which is equal to the value of the bit rate (ER(k)) carried by the said backward-resource management cell (BW-RM) and the programming time of which is the closest programming time $(t_p^-(k)=t_b(k)+\tau_3)$ when the requested bit rate (ER(k)) carried by the backward-resource management cell (BW-RM) with order k which arrives at moment in time $(t_b(k))$ is equal to the bit rate (ACR($l$,$t_p^-$(k))) programmed at the closest programming moment in time $(t_p^-(k)=t_b(k)+\tau_3)$.

7. Method according to one of claims 4 to 6, **characterised in that** it consists, when adding to the list an event for a time corresponding to the closest time $(t_p^-(k)=t_b(k)+\tau_3)$, in verifying, before adding the said event, whether the number of events in list $l$ is equal to the said finite number N and whether the programming time of the last event in list $l$ ($t_p$(N)) is less than or equal to the closest programming time $(t_p^-(k)=t_b(k)+\tau_3)$, defining the programming time of the event to be added $(t_p(k))$ as being equal to the said programming time of the last event in the list, deleting the last event from the list and adding the said event to be added in place of the last event in list $l$, otherwise, if the number of events in the list is less than the said finite number N, defining the programming time of the event to be added as being equal to the closest programming time $(t_p^-(k)=t_b(k)+\tau_3)$ and adding the said event to the list.

8. Method according to one of claims 4 to 7, **characterised in that** it consists, when adding an event to the list for a time corresponding to the most distant time, in verifying, before adding the said event, whether the number of events in list $l$ is equal to the said finite number N, and, if so, replacing the programming time $(t_p(k))$ of the event to be added with the programming time of the last event in the list $(t_{pl}(N))$ if the bit rate of the said event to be added (ER(k)) is greater than or equal to the last programmed bit rate in the list ER(N), then programming, in place of the penultimate event in the list (with order N-1), an event the programming time of which is that of the penultimate event in list $l$ (ACR(N-1),$(t_{pl}$(N-1)) and the bit rate of which is the greater bit rate of the bit rates of the last two events in list $l$ (ACR(N-1) =Max(ACR(N-1), ACR(N))) and then adding the event to be added in place of the last event in list $l$.

9. Method according to claim 5 to 8, **characterised in that** it consists, when adding an event to list $l$, in verifying whether the number of events contained in list $l$ does not exceed the said finite number and, if so, looking in list $l$ for two successive events for which the product of the increase or decrease in bit rate and the measurement of the time interval between their two programming times is a minimum and then replacing them with an event the bit rate of which is the greater of the two bit rates and the programming time of which is the first of the two programming times.

10. User-network interface unit to which it is possible to connect, on the one hand, a source terminal and, on the other hand, a high-speed network, for example a network using the transfer mode known as ATM, a source terminal connected to the said unit periodically transmitting a cell known as a resource management cell which is returned in the form of a cell known as a backward-resource management cell by a destination terminal with which the source terminal is in communication, the said resource management cell comprising a field in which the value of a requested bit rate is stored, the said interface unit comprising means for implementing a control process (21b) consisting in verifying the bit rate conformity of the cells transmitted by the said source terminal with a bit rate programmed by means implementing a programming process, **characterised in that** the said means for implementing the said programming process are intended, on the one hand, to determine, upon the arrival of a backward-resource management cell (BW-RM) with order k at the said interface unit (21), the time, known as the programming time ($t_p(k)$), when the rate request (ER(k)) included in the field of the said cell (BW-RM) is taken into account by the said control process (21b), the said programming time being equal to the said arrival time ($t_b(k)$) delayed by the minimum forward-backward delay ($\tau_3$) between the said interface and the said terminal, known as the closest programming time, when the said account taken at this closest programming time results in an increase in programmed rate, being greater than the closest programming time and less than the said arrival time ($t_b(k)$) delayed by a maximum forward-backward delay ($\tau_2$), ($t_b(k)+\tau_2$) known as the most distant programming time, if taking account of it at the said closest programming time ($t_b(k)+\tau_3$) results in a decrease in bit rate, and, on the other hand, to transmit, upon the expiry of the programming time ($t_p(k)$), the said bit rate value to be controlled ($ACR(t_p(k))$) to the means for implementing the said control process (21b) for controlling the flow transmitted by the said source terminal.

11. User-network interface unit according to claim 10, **characterised in that** it comprises means for keeping a list (*l*) of programming events, each event being defined by a pair of values, the first of which represents a bit rate value $ACR(t_p(k))$ and the second of which represents the programming time $t_p(k)$ of the said bit rate value $ACR(t_p(k))$, the said list being arranged in order according to the said event programming time.

12. User-network interface unit according to claim 11, **characterised in that** it comprises means for determining the programmed bit rate ($ACR(t_p(k))$) at the arrival time $t_b(k)$ delayed by the minimum forward-backward delay $\tau_3$ ($t_p^-(k)=t_b(k)+\tau_3$), which define a function $ACR(l,t)$ making it possible to determine, on the basis of the events present in list *l*, the value of the bit rate programmed at any time t as follows:

if, in the said list *l*, there is at least one programming event $\{ACR(t_p), t_p\}$ provided at a programming time $t_p$ between the present time $t_0$ and time t, the said value is equal to the programming bit rate of this event $ACR(t_p)$ and, if there are several of them, it is equal to the programming bit rate of the last of these events, and if, still in the same list, there are no programmed events between the present time $t_0$ and t, the said value is equal to the value of the bit rate currently being controlled in the control process.

13. User-network interface unit according to claim 11 or 12, **characterised in that** it comprises means which:

upon the arrival at the interface unit (21) to which the said source terminal is connected of a backward-resource management cell (BW-RM) with reference number (k), compare the bit rate (ER(k)) carried by the said cell with the programmed rate ($ACR(l,t_p^-(k))$) at the closest programming moment in time,
which, if the said comparison made upon each arrival of a resource management cell (BW-RM) shows that the requested bit rate ER (k) is greater than the bit rate programmed at the closest programming time ($ACR(l,t_p^-(k))$), delete from the said list *l* any bit rate programming event provided at a time greater than or equal to the closest programming time ($t_p^-(k)$) and add to the said list *l* an event the controlled bit rate of which is equal to the value of the bit rate ER(k) carried by the said cell and the programming time of which is the closest programming time ($t_p^-(k)=t_b(k))+\tau_3$),
which, if the said comparison shows that the requested bit rate ER(k) is equal to the programmed bit rate $ACR(l,t_p^-(k))$ at the closest programming time, delete from list *l* any bit rate programming event the programming time of which is greater than the closest programming time ($t_p^-(k)=t_b(k)+\tau_3$),
which, if the said comparison shows that the requested rate ER(k) is less than the programmed bit rate $ACR(l,t_p^-(k))$, look in the said list *l* to see if there is an event the programming time ($t'_p$) of which is the smallest programming time in the list greater than the closest time and the bit rate of which is less than or equal to the requested bit rate ER(K), and, if this search shows that this event does not exist, add to list *l* an event the bit rate of which is equal to the value of the requested bit rate ER(k) and the programming time of which is the most distant programming time ($t_p^+(k)=t_b(k)+\tau_2$), while, if this search shows that this event exists, they delete from the list *l* any programming event the programming time of which is greater than or equal to the programming time ($t'_p$) of the said event thus found and they add to list *l* an event the bit rate of which is equal to the value of the requested rate ER(k) and the programming time of which is equal to the programming time of the said event found (t'$_p$),

and which replace the control rate of the control process (21 b) with the bit rate of the first event {ACR(l), t$_p$(1)} programmed in the list of programming events when the programming time t$_p$(1) of the said first event comes to an end.

14. User-network interface unit according to one of claims 11 to 13, **characterised in that** it comprises means for limiting the number of events stored in the said list *l* to a finite number N of events equal to or greater than two, and which, before adding a new event to the said list, verify whether the number of events contained in the said list is not greater than the said finite number and, if so, implement a function to reduce the number of events contained in the list.

15. User-network interface unit according to claim 13 or 14, **characterised in that** the said reduction function consists in deleting from list *l* any bit rate programming event the programming time of which is greater than or equal to the closest programming time (t$_p^-$(k)=t$_b$(k)+$\tau_3$) and adding to list *l* an event the bit rate of which is equal to the value of the bit rate (ER(k)) carried by the said backward-resource management cell (BW-RM) and the programming time of which is the closest programming time (t$_p^-$(k)=t$_b$(k)+$\tau_3$) when the requested bit rate (ER(k)) carried by the backward-resource management cell (BW-RM) with order k which arrives at moment in time (t$_b$(k)) is equal to the bit rate (ACR(*l*,t$_p^-$(k))) programmed at the closest programming moment in time (t$_p^-$(k)=t$_b$(k)+$\tau_3$).

16. User-network interface unit according to one of claims 13 to 15, **characterised in that** it comprises means for verifying, when adding to the list an event for a time corresponding to the closest time (t$_p^-$(k) =t$_b$(k)+$\tau_3$) and before adding the said event, whether the number of events in list *l* is equal to the said finite number N and whether the programming time of the last event in list *l* (t$_p$(N)) is less than or equal to the closest programming time (t$_p^-$(k)=t$_b$(k)+$\tau_3$) and which then define the programming time of the event to be added (t$_p$(k)) as being equal to the said programming time of the last event in the list, delete the last event from the list and add the said event to be added in place of the last event in list *l*, otherwise, if the number of events in the list is less than the said finite number N, the said means are intended to define the programming time of the event to be added as being equal to the closest programming time (t$_p^-$(k)=t$_b$(k)+$\tau_3$) and they add the said event to the list.

17. User-network interface unit according to one of claims 13 to 16, **characterised in that** it comprises means for verifying, when adding an event to the list for a time corresponding to the most distant time, and, before adding the said event, whether the number of events in list *l* is equal to the said finite number N, and, if so, for replacing the programming time (t$_p$(k)) of the event to be added with the programming time of the last event in the list (t$_{pl}$(N)) if the bit rate of the said event to be added (ER(k)) is greater than or equal to the last programmed bit rate in the list ER(N), for programming, in place of the penultimate event in the list (with order N-1), an event the programming time of which is that of the penultimate event in list *l* (ACR(N-1),(t$_{pl}$(N-1)) and the bit rate of which is the greater bit rate of the bit rates of the last two events in list *l* (ACR(N-1)=Max (ACR(N-1), ACR(N))) and for adding the event to be added in place of the last event in list *l*.

18. User network interface unit according to claim 14 to 17, **characterised in that** it comprises means for verifying, when adding an event to list *l*, whether the number of events contained in list *l* does not exceed the said finite number and, if so, for looking in list *l* for two successive events for which the product of the increase or decrease in bit rate and the measurement of the time interval between their two programming times is a minimum and then for replacing them with an event the bit rate of which is the greater of the two bit rates and the programming time of which is the first of the two programming times.

## Patentansprüche

1. Verfahren zur Kontrolle der Konformität der Menge der Datumszellen, die von einem Ausgangsterminal entsendet werden, das mit einem Empfangsterminal über ein Hochleistungsnetz, beispielsweise ein Netz, das den so genannten ATM-Übertragungsmodus verwendet, in Verbindung steht, wobei dieses Netz Schnittstelleneinheiten Benutzer-Netz, an die die Terminals angeschlossen sind, und eventuell Schnittstelleneinheiten Netz-Netz umfasst, wobei das Ausgangsterminal periodisch eine so genannte Ressourcensteuerungszelle entsendet, die durch das Empfangsterminal an das Ausgangsterminal in Form einer so genannten Ressourcensteuerungsrückzelle zurückgesendet wird, wobei die Ressourcensteuerungszelle ein Feld umfasst, in dem der Wert einer angeforderten Menge gespeichert ist, wobei das Verfahren einen Kontrollschritt (21b) umfasst, der darin besteht, die Konformität der Menge der vom Ausgangsterminal entsendeten Zellen mit einem durch einen so genannten Programmierungsschritt programmierten Menge zu überprüfen, **dadurch gekennzeichnet, dass** der Programmierungsschritt bei Ankunft einer Ressourcensteuerungsrückzelle (BW-RM) der Ordnung k an der Schnittstelleneinheit (21) darin besteht, das so genannte Programmierungsdatum ($t_p$ (k)) der Berücksichtigung der Mengenanforderung (ER(k)), die in dem Feld der Zelle (BW-RM) enthalten ist, zu bestimmen, wobei das Programmierungsdatum gleich dem Ankunftsdatum ($t_b$(k)), verzögert um die minimale Hin- und Rücksendefrist ($\tau_3$) zwischen der Schnittstelle und dem Terminal, nächstes Programmierungsdatum genannt, ist, wenn die Berücksichtigung zu diesem nächsten Programmierungsdatum zu einer Erhöhung der programmierten Menge führt, wobei diese größer als die nächste Programmierungszeit und geringer als das Ankunftsdatum ($t_b$(k)) ist, verzögert um eine maximale Hin- und Rücksendefrist ($\tau_2$), ($t_p$(k))+$\tau_2$), am weitesten entferntes Programmierungsdatum genannt, wenn die Berücksichtigung zu der nächsten Programmierungsfrist ($t_b$(k))+$\tau_3$) zu einer Verringerung der Menge geführt hat, und darin besteht, bei Fälligkeit der Programmierungszeit (($t_p$(k)) den zu kontrollierenden Mengenwert (ACR($t_p$(k)) an den Kontrollschritt (21b) weiterzuleiten, um den von dem Ausgangsterminal entsendeten Fluss zu kontrollieren.

2. Verfahren nach Anspruch 1, **dadurch gekennzeichnet, dass** es darin besteht, eine Liste (1) von Programmierungsereignissen zu erstellen, wobei jedes Ereignis durch ein Wertepaar definiert ist, von denen der erste einen Mengenwert ACR($t_p$(k)) und der zweite das Programmierungsdatum ($t_p$(k)) des Mengenwerts ACR($t_p$(k)) darstellt, wobei die Liste nach dem Programmierungsdatum der Ereignisse geordnet ist.

3. Verfahren nach Anspruch 2, **dadurch gekennzeichnet, dass** es darin besteht, um die programmierte Menge (ACR($t_p$(k))) zum Ankunftsdatum ($t_b$ (k)), verzögert um die minimale Hin- und Rücksendedauer $\tau_3$($t_p$(k))=($t_b$(k))+$\tau_3$) zu kennen, eine Funktion ACR(l,t) zu definieren, die ausgehend von den in der Liste 1 vorhandenen Ereignissen den Wert der programmierten Menge zu einer beliebigen Zeit t auf folgende Weise bestimmt:

    wenn in der List l mindestens ein Programmierungsereignis (ACR($t_p$),$t_p$), das zu einer Programmierungszeit $t_p$ vorgesehen ist, die zwischen der jetzigen Zeit $t_0$ und der Zeit t liegt, vorhanden ist, ist der Wert gleich der Programmierungsmenge dieses Ereignisses ACR($t_p$), oder, wenn mehrere vorhanden sind, ist er gleich der Menge des letzten dieser Ereignisse, und
    wenn ebenfalls in dieser Liste keine programmierten Ereignisse zwischen der jetzigen Zeit

$t_0$ und t vorhanden sind, ist der Wert gleich dem Wert der aktuell im Kontrollschritt kontrollierten Menge.

4. Verfahren nach Anspruch 2 oder 3, **dadurch gekennzeichnet, dass** es darin besteht:

- bei Ankunft einer Ressourcensteuerungsrückzelle (BW-RM) mit der Referenznummer (k) an der Schnittstelleneinheit (21), an die das Ausgangsterminal angeschlossen ist, die Menge (ER(k)), die die Zelle trägt, mit der programmierten Menge (ACR(l,$t_p$(k))) zum nächsten Programmierungszeitpunkt zu vergleichen, dann

- wenn der Vergleich, der bei jeder Ankunft einer Ressourcensteuerungszelle (BW-RM) durchgeführt wurde, zeigt, dass die angeforderte Menge ER(k) größer als die programmierte Menge zur nächsten Programmierungszeit (ACR(l,$t_p$(k))) ist, in der Liste l jedes Ereignis einer Mengenprogrammierung wegzulassen, das zu einer Zeit größer oder gleich der nächsten Programmierungszeit ($t_p^-$(k)) vorgesehen ist, und in der Liste l ein Ereignis hinzuzufügen, dessen kontrollierte Menge gleich dem Wert der Menge ER(k) ist, die von der Zelle getragen wird, und dessen Programmierungszeit die nächste Programmierungszeit ($t_p^-$(k)=($t_b$(k)+$\tau_3$) ist,

- wenn der vergleich zeigt, dass die angeforderte Menge ER(k) gleich der programmierten Menge (ACR(l,$t_p^-$(k)) zur nächsten Programmierungszeit ist, in der Liste l jedes Ereignis zur Programmierung einer Menge weglassen, dessen Programmierungszeit größer als die nächste Programmierungszeit ($t_p^-$(k)=($t_b$(k)+$\tau_3$) ist,

- wenn der Vergleich zeigt, dass die angeforderte Menge ER(k) geringer als die programmierte Menge ACR(l,$t_p^-$(k)) ist, in der Liste 1 zu suchen, ob ein Ereignis vorhanden ist, dessen Programmierungszeit ($t_p'$) die kleinste Programmierungszeit in der Liste, größer als die nächste Zeit ist und dessen Menge geringer oder gleich der angeforderten Menge ER(k) ist,

- wenn diese Suche zeigt, dass dieses Ereignis nicht vorhanden ist, in der Liste 1 ein Ereignis hinzuzufügen, dessen Menge gleich dem Wert der angeforderten Menge ER(k) ist und dessen Programmierungszeit die am weitesten entfernte Programmierungszeit ($t_p^+$(k)=($t_b^-$(k)+$\tau_2$) ist, und

- wenn diese Suche zeigt, dass dieses Ereignis vorhanden ist, in der Liste I jedes Programmierungsereignis wegzulassen, dessen Programmierungszeit größer oder gleich der Programmierungszeit ($t'_p$) des so gefundenen Ereignisses ist, und in der Liste I ein Ereignis hinzuzufügen, dessen Menge gleich dem Wert der angeforderten Menge ER(k) ist und dessen Programmierungszeit gleich der Programmierungszeit des gefundenen Ereignisses ($t'_p$) ist,

- und die Kontrollmenge des Kontrollschrittes (21b) mit der Menge des ersten Ereignisses (ACR(I),($t_p$(I)), das in der Liste von Programmierungsereignissen programmiert ist, zu tauschen, wenn die Programmierungszeit ($t_p$(1)) des ersten Ereignisses ihre Fälligkeit erreicht.

5. Verfahren nach einem der Ansprüche 2 bis 4, **dadurch gekennzeichnet, dass** es darin besteht, die Anzahl von in der Liste 1 gespeicherten Ereignissen auf eine Endzahl N von Ereignissen gleich oder größer als zwei zu begrenzen, und vor dem Hinzufügen eines neuen Ereignisses in die Liste zu überprüfen, ob die Anzahl von in der Liste enthaltenen Ereignissen nicht größer als die Endzahl ist, und in diesem Fall nun eine Funktion zur Verringerung der Zahl von in der Liste enthaltenen Ereignissen einzusetzen.

6. Verfahren nach Anspruch 4 oder 5, **dadurch gekennzeichnet, dass** die Verringerungsfunktion, wenn die angeforderte Menge (ER(k)), die die Ressourcensteuerungsrückzelle (BW-RM) der Ordnung k trägt, die zum Zeitpunkt ($t_b$(k)) angekommen ist, gleich der programmierten Menge (ACR(I,$t_p^-$(k)) zum nächsten Programmierungszeitpunkt ($t_p^-$(k)= ($t_b$(k)+$\tau_3$) ist, darin besteht, in der Liste I jedes Ereignis zur Mengenprogrammierung wegzulassen, dessen Programmierungszeit größer oder gleich der nächsten Programmierungszeit ($t_p^-$(k)=($t_b$(k) +$\tau_3$) ist, und in der Liste I ein Ereignis hinzuzufügen, dessen Menge gleich dem Wert der Menge (ER(k)) ist, die von der Ressourcensteuerungsrückzelle (BW-RM) getragen wird und dessen Programmierungszeit die nächste Programmierungszeit ($t_p^-$(k) =($t_b$(k)+$\tau_3$) ist.

7. Verfahren nach einem der Ansprüche 4 bis 6, **dadurch gekennzeichnet, dass** es bei der Hinzufügung eines Ereignisses in die Liste für eine Zeit, die der nächsten Zeit ($t_p^-$(k)=($t_b$(k)+$\tau_3$) entspricht, darin besteht, vor der Hinzufügung dieses Ereignisses zu überprüfen, ob die Anzahl von Ereignissen in der Liste I gleich der Endzahl N ist und ob die Programmierungszeit des letzten Ereignisses in der Liste I ($t_p$(N)) geringer oder gleich der nächsten Programmierungszeit ($t_p^-$(k)=($t_b$(k)+$\tau_3$) ist, die Programmierungszeit des hinzuzufügenden Ereignisses ($t_p$(k)) als gleich mit der Programmierungszeit des letzten Ereignisses der Liste zu definieren, das letzte Ereignis der Liste wegzulassen und das hinzuzufügende Ereignis an die Stelle des letzten Ereignisses in der Liste 1 hinzuzufügen, andernfalls, wenn die Anzahl von Ereignissen in der Liste geringer als die Endzahl N ist, die Programmierungszeit des hinzuzufügenden Ereignisses als gleich mit der nächsten Programmierungszeit ($t_p^-$(k)=($t_b$(k)+$\tau_3$) zu definieren und das Ereignis in die Liste hinzuzufügen.

8. Verfahren nach einem der Ansprüche 4 bis 7, **dadurch gekennzeichnet, dass** es bei einer Hinzufügung eines Ereignisses in die Liste für eine Zeit, die der am weitesten entfernten Zeit entspricht, darin besteht, vor der Hinzufügung dieses Ereignisses zu überprüfen, ob die Anzahl von Ereignissen in der Liste 1 gleich der Endzahl N ist, und, falls dies der Fall ist, die Programmierungszeit ($t_p$(k)) des hinzuzufügenden Ereignisses durch die Programmierungszeit des letzten Ereignisses der Liste ($t_{p1}$(N)) zu ersetzen, wenn die Menge des hinzuzufügenden Ereignisses (ER(k)) größer oder gleich der letzten programmierten Menge in der Liste ER(N) ist, dann an der Stelle des vorletzten Ereignisses der Liste (der Ordnung N-1) ein Ereignis zu programmieren, dessen Programmierungszeit jene des vorletzten Ereignisses der Liste I (ACR(N-1),($t_{pl}$(N-1)) und dessen Menge die größte Menge zwischen den Mengen der beiden letzten Ereignisse der Liste I (ACR(N-1)=Max(ACR(N-1), ACR(N)) ist, dann das hinzuzufügende Ereignis an die Stelle des letzten Ereignisses in der Liste 1 hinzuzufügen.

9. Verfahren nach Anspruch 5 bis 8, **dadurch gekennzeichnet, dass** es bei der Hinzufügung eines Ereignisses in der Liste 1 darin besteht zu überprüfen, ob die Anzahl von Ereignissen, die in der Liste 1 enthalten sind, die Endzahl übersteigt, und falls dies der Fall ist, in der Liste 1 zwei aufeinander folgende Ereignisse zu suchen, bei denen das Produkt der Erhöhung oder der Verringerung der Menge durch die Messung des Zeitintervalls zwischen den beiden Programmierzeiten minimal ist, sie dann durch ein Ereignis zu ersetzen, dessen Menge die größte der beiden Mengen und dessen Programmierungszeit die erste der beiden Programmierungszeiten ist.

10. Schnittstelleneinheit Benutzer-Netz, an die einerseits ein Ausgangsterminal und anderseits ein Hochleistungsnetz, beispielsweise ein Netz, das den so genannten ATM-Übertragungsmodus einsetzt, angeschlossen werden können, wobei ein an die Einheit angeschlossenes Ausgangsterminal periodisch eine so genannte Ressourcensteuerungszelle entsendet, die in Form einer so genannten Ressourcensteuerungsrückzelle von einem Empfangsterminal zurückgesendet wird, mit dem das Ausgangsterminal in Verbindung steht, wobei die Ressourcensteuerungszelle ein Feld umfasst, in dem der Wert einer angeforderten Menge gespeichert ist, wobei die Schnittstelleneinheit Mittel umfasst, um einen Kontrollschritt (21b) einzusetzen, der darin besteht, die Konformität der Menge der von dem Ausgangsterminal entsendeten Zellen, mit einer von den Mitteln programmierten Menge unter Einsatz des Programmierungsschrittes zu überprüfen, **dadurch gekennzeichnet, dass** die Mittel für den Einsatz des Pragrammierungsschrittes dazu vorgesehen sind, einerseits bei Ankunft einer Ressourcensteuerungsrückzelle (BW-RM) der Ordnung k an der Schnittstelleneinheit (21) das so genannte Programmierungsdatum $(t_p(k))$ der Berücksichtigung der Mengenanforderung (ER(k)), die in dem Feld der Zelle (BW-RM) enthalten ist, zu bestimmen, wobei das Programmierungsdatum gleich dem Ankunftsdatum $(t_b(k))$ ist, verzögert um die minimale Hin- und Rücksendefrist $(\tau_3)$ zwischen der Schnittstelle und dem Terminal, nächstes Programmierungsdatum genannt, wenn die Berücksichtigung zu diesem nächsten Programmierungsdatum zu einer Erhöhung der programmierten Menge führt, wobei diese größer als die nächste Programmierungszeit und geringer als das Ankunftsdatum $(t_b(k))$ ist, verzögert um eine maximale Hin- und Rücksendefrist $(\tau_2)$, $(t_b(k))+\tau_2)$, am weitesten entferntes Programmierungsdatum genannt, wenn die Berücksichtigung zu der nächsten Programmierungsfrist $(t_b(k))+\tau_3)$ zu einer Verringerung der Menge geführt hat, und um andererseits bei Fälligkeit der Programmierungszeit $((t_p(k))$ den zu kontrollierenden Mengenwert $(ACR(t_p(k))$ an die Mittel für den Einsatz des Kontrollschrittes (21b) weiterzuleiten, um den von dem Ausgangsterminal entsendeten Fluss zu kontrollieren.

**11.** Schnittstelleneinheit Benutzer-Netz nach Anspruch 10, **dadurch gekennzeichnet, dass** sie Mittel umfasst, um eine Liste (l) von Programmierungsereignissen zu erstellen, wobei jedes Ereignis durch ein Wertepaar definiert ist, von denen der erste einen Mengenwert $ACR(t_p(k))$ und der zweite das Programmierungsdatum $(t_p(k))$ des Mengenwerts $ACR(t_p(k))$ darstellt, wobei die Liste nach dem Programmierungsdatum der Ereignisse geordnet ist.

**12.** Schnittstelleneinheit Benutzer-Netz nach Anspruch 11, **dadurch gekennzeichnet, dass** sie Mittel umfasst, um die programmierte Menge $(ACR(t_p^-(k)))$ zum Ankunftsdatum $(t_b(k))$, verzögert um die minimale Hin- und Rücksendedauer $\tau_3(t_p(k))=(t_b(k))+\tau_3)$ zu kennen, eine Funktion ACR(l,t) zu definieren, die ausgehend von den in der Liste l vorhandenen Ereignissen den Wert der programmierten Menge zu einer beliebigen Zeit tde auf folgende Weise bestimmt:

wenn in der Liste l mindestens ein Programmierungsereignis $(ACR(t_p),t_p)$, das zu einer Programmierungszeit $t_p$ vorgesehen ist, die zwischen der jetzigen Zeit $t_0$ und der Zeit t liegt, vorhanden ist, ist der Wert gleich der Programmierungsmenge dieses Ereignisses $ACR(t_p)$, und wenn mehrere vorhanden sind, ist er gleich der Programmierungsmenge des letzten dieser Ereignisse, und

wenn ebenfalls in dieser Liste keine programmierten Ereignisse zwischen der jetzigen Zeit $t_0$ und t vorhanden sind, ist der Wert gleich dem Wert der aktuell im Kontrollschritt kontrollierten Menge.

**13.** Schnittstelleneinheit Benutzer-Netz nach Anspruch 11 oder 12, **dadurch gekennzeichnet, dass** es Mittel umfasst, die:

- bei Ankunft einer Ressourcensteuerungsrückzelle (BW-RM) mit der Referenznummer (k) an der Schnittstelleneinheit (21), an die das Ausgangsterminal angeschlossen ist, die Menge (ER(k)), die die Zelle trägt, mit der programmierten Menge $(ACR(l,t_p(k))$ zum nächsten Programmierungszeitpunkt vergleichen,

- wenn der Vergleich, der bei jeder Ankunft einer Ressourcensteuerungszelle (BW-RM) durchgeführt wurde, zeigt, dass die angeforderte Menge ER(k) größer als die programmierte Menge zur nächsten Programmierungszeit $(ACR(l,t_p^-(k)))$ ist, in der Liste l jedes Ereignis einer Mengenprogrammierung weglassen, das zu einer Zeit größer oder gleich der nächsten Programmierungszeit $(t_p^-(k))$ vorgesehen ist, und in der Liste 1 ein Ereignis hinzufügen, dessen kontrollierte Menge gleich dem Wert der Menge ER(k) ist, die von der Zelle getragen wird, und dessen Programmierungszeit die nächste Programmierungszeit $(t_p^-(k)=(t_b(k)+\tau_3)$ ist,

- wenn der Vergleich zeigt, dass die angeforderte Menge ER(k) gleich der programmierten Menge $(ACR(l,t_p^-(k))$ zur nächsten Programmierungszeit ist, in der Liste 1 jedes Ereignis zur Programmierung einer Menge weglassen, dessen Programmierungszeit größer als die die nächste Programmierungszeit $(t_p^-(k)=(t_b(k)+\tau_3)$ ist,

- wenn der Vergleich zeigt, dass die angeforderte Menge ER(k) geringer als die programmierte Menge $ACR(l,t_p^-(k))$ ist, in der Liste 1 suchen, ob ein Ereignis vorhanden ist, dessen Programmierungszeit ($t'_p$) die kleinste Programmierungszeit in der Liste größer als die nächste Zeit ist und dessen Menge geringer oder gleich der angeforderten Menge ER(k) ist, und wenn diese Suche zeigt, dass dieses Ereignis nicht vorhanden ist, in der Liste 1 ein Ereignis hinzufügen, dessen Menge gleich dem Wert der angeforderten Menge ER(k) ist und dessen Programmierungszeit die am weitesten entfernte Programmierungszeit ($t_p^+(k)=(t_b^-(k)+\tau_2)$) ist, während, wenn diese Suche zeigt, dass dieses Ereignis vorhanden ist, in der Liste 1 jedes Programmierungsereignis weglassen, dessen Programmierungszeit größer oder gleich der Programmierungszeit ($t'_p$) des so gefundenen Ereignisses ist, und in der Liste 1 ein Ereignis hinzufügen, dessen Menge gleich dem Wert der angeforderten Menge ER(k) ist und dessen Programmierungszeit gleich der Programmierungszeit des gefundenen Ereignisses ($t'_p$) ist,

- und die Kontrollmenge des Kontrollschrittes (21b) mit der Menge des ersten Ereignisses (ACR(l),($t_p$(l)), das in der Liste von Programmierungsereignissen programmiert ist, tauschen, wenn die Programmierungszeit ($t_p$(l)) des ersten Ereignisses ihre Fälligkeit erreicht.

14. Schnittstelleneinheit Benutzer-Netz nach einem der Ansprüche 11 bis 13, **dadurch gekennzeichnet, dass** sie Mittel umfasst, um die Anzahl von in der Liste l gespeicherten Ereignissen auf eine Endzahl N von Ereignissen gleich oder größer als zwei zu begrenzen, und vor dem Hinzufügen eines neuen Ereignisses in die Liste zu überprüfen, ob die Anzahl von in der Liste enthaltenen Ereignissen nicht größer als die Endzahl ist, und in diesem Fall nun eine Funktion zur Verringerung der Zahl von in der Liste enthaltenen Ereignissen einzusetzen.

15. Schnittstelleneinheit Benutzer-Netz nach Anspruch 13 oder 14, **dadurch gekennzeichnet, dass** die Verringerungsfunktion, wenn die angeforderte Menge (ER(k)), die die Ressourcensteuerungsrückzelle (BW-RM) der Ordnung k trägt, die zum Zeitpunkt ($t_b$(k)) angekommen ist, gleich der programmierten Menge (ACR(l,$t_p^-$(k)) zum nächsten Programmierungszeitpunkt ($t_p^-(k)=(t_b(k)+\tau_3)$) ist, darin besteht, in der Liste 1 jedes Ereignis zur Mengenprogrammierung wegzulassen, dessen Programmierungszeit größer oder gleich der nächsten Programmierungszeit ($t_p^-(k)=(t_b(k)+\tau_3)$) ist, und in der Liste 1 ein Ereignis hinzufügen, dessen Menge gleich dem Wert der Menge (ER(k)) ist, die von der Ressourcensteuerungsrückzelle (BW-RM) getragen wird und dessen Programmierungszeit die nächste Programmierungszeit ($t_p^-(k)=(t_b(k)+\tau_3)$) ist.

16. Schnittstelleneinheit Benutzer-Netz nach einem der Ansprüche 13 bis 15, **dadurch gekennzeichnet, dass** sie Mittel umfasst, um bei der Hinzufügung eines Ereignisses in die Liste für eine Zeit, die der nächsten Zeit ($t_p^-(k)=(t_b(k)+\tau_3)$) entspricht, vor der Hinzufügung dieses Ereignisses zu überprüfen, ob die Anzahl von Ereignissen in der Liste l gleich der Endzahl N ist und ob die Programmierungszeit des letzten Ereignisses in der Liste l ($t_p$(N)) geringer oder gleich der nächsten Programmierungszeit ($t_p^-(k)=(t_b(k)+\tau_3)$) ist, die Programmierungszeit des hinzuzufügenden Ereignisses ($t_p$(k)) als gleich mit der Programmierungszeit des letzten Ereignisses der Liste zu definieren, das letzte Ereignis der Liste wegzulassen und das hinzuzufügende Ereignis an die Stelle des letzten Ereignisses in der Liste l hinzuzufügen, andernfalls, wenn die Anzahl von Ereignissen in der Liste geringer als die Endzahl N ist, die Programmierungszeit des hinzuzufügenden Ereignisses als gleich mit der nächsten Programmierungszeit ($t_p^-(k)=(t_b(k)+\tau_3)$) zu definieren und das Ereignis in die Liste hinzuzufügen.

17. Schnittstelleneinheit Benutzer-Netz nach einem der Ansprüche 13 bis 16, **dadurch gekennzeichnet, dass** sie Mittel umfasst, um bei einer Hinzufügung eines Ereignisses in die Liste für eine Zeit, die der am weitesten entfernten Zeit entspricht, vor der Hinzufügung dieses Ereignisses zu überprüfen, ob die Anzahl von Ereignissen in der Liste l gleich der Endzahl N ist, und, falls dies der Fall ist, die Programmierungszeit ($t_p$(k)) des hinzuzufügenden Ereignisses durch die Programmierungszeit des letzten Ereignisses der Liste ($t_{pl}$(N)) zu ersetzen, wenn die Menge des hinzuzufügenden Ereignisses (ER(k)) größer oder gleich der letzten programmierten Menge in der Liste ER(N) ist, dann an der Stelle des vorletzten Ereignisses der Liste (der Ordnung N-1) ein Ereignis zu programmieren, dessen Programmierungszeit jene des vorletzten Ereignisses der Liste l (ACR(N-1),($t_{pl}$(N-1)) und dessen Menge die größte Menge zwischen den Mengen der beiden letzten Ereignisse der Liste l (ACR(N-1)=Max(ACR(N-1), ACR(N)) ist, dann das hinzuzufügende Ereignis an die Stelle des letzten Ereignisses in der Liste l hinzuzufügen.

18. Schnittstelleneinheit Benutzer-Netz nach Anspruch 14 bis 17, **dadurch gekennzeichnet, dass** sie Mittel umfasst, um bei der Hinzufügung eines Ereignisses in der Liste l zu überprüfen, ob die Anzahl von Ereignissen, die in der Liste l enthalten sind, die Endzahl übersteigt, und falls dies der Fall ist, in der Liste l zwei aufeinander folgende Ereignisse zu suchen, bei denen das Produkt der Erhöhung oder der Verringerung der Menge durch die Messung des Zeitintervalls zwischen den beiden Programmierzeiten minimal ist, sie dann durch ein Ereignis zu ersetzen, dessen Menge die größte der beiden Mengen und dessen Programmierungszeit die erste der beiden Programmierungszeiten ist.

FIG.1

FIG.1a

FIG.1b

100

$>0$     ER(k),ACR(t$_p$(k))     $0 <$

210

$=0$       220

230

oui    $t'_p$ ?

232

233        non    231

211

ACR(t)=ER(k)

pour $t \geqslant t_p^-(k)$

ACR(t) = ER(k) pour $t \geqslant t'_p$

ACR(t) = ER(k) pour $t \geqslant t_p^+(k)$

FIN

FIG.2

# FIG.3

$z_2 = 8$
$z_3 = 5$

## FIG.4

$z3 = 10$

$z2 = 20$

FIG.5

FIG.6

$z_3 = 10$

$z_2 = 20$

FIG.7